# EUROPÄISCHE PATENTSCHRIFT

(11) **EP 1 180 473 B1**
(45) Veröffentlichungstag und Bekanntmachung des Hinweises auf die Patenterteilung: **13.12.2006**
(21) Anmeldenummer: 01119100.4
(22) Anmeldetag: 08.08.2001
(51) Int. Cl.: B62D 51/00

(54) **Deichselkopf mit einem Fahrschalter für ein deichselgelenktes Flurförderzeug**
Drawbarhead with a drive switch for an industrial truck guided by a drawbar
Tête de timon avec bouton de vitesse pour un chariot de manutention guidé par timon

(30) Priorität: 09.08.2000 DE 20013656 U
(43) Veröffentlichungstag der Anmeldung: 20.02.2002
(73) Patentinhaber: REMA Lipprandt GmbH & Co. KG, D-53175 Bonn (DE)
(72) Erfinder: Standke, Kurt, Dr., 53175 Bonn (DE)
(74) Vertreter: Koch, Theodor

(56) Entgegenhaltungen:
- DE-A- 4 444 772
- DE-A- 19 523 921

## Beschreibung

Die Erfindung bezieht sich auf einen Deichselkopf mit einem Fahrschalter zur Steuerung des Fahrantriebs eines kraftgetriebenen, deichselgelenkten Flurförderzeuges nach dem Oberbegriff des Anspruches 1.

Hubwagen oder Hublader im Mitgehbetrieb weisen eine Deichsel auf, mit der das Förderzeug gelenkt wird. Die Anlenkung der Deichsel erfolgt an der Halterung für das verschwenkbare Antriebsrad des Förderzeugs. Am freien Ende ist ein Deichselkopf vorgesehen, der mehrere Betätigungsorgane zum Betrieb des Förderzeugs aufweist. Die letzteren umfassen einen Fahrschalter, Tasten für den Heb- und Senkbetrieb, die Hupe sowie einen Körperschutzschalter.

Eine Deichsel mit einem Deichselkopf der eingangs genannten Art ist gemäß der DE 195 23 921 A1 bekannt. Ausgehend von einem Deichselkopf mit einem Horn in Verlängerung des Deichselstiels sind beidseits des Horns Griffstücke angebracht, die an einem vom Horn ausgehenden Schutzbügel mit Grifföffnungen jeweils angebunden sind, wobei zwischen dem Horn und den Griffstücken auf beiden Seiten Fahrschaltergriffe angeordnet sind. Dabei wird gemäß der DE 195 23 921 A1 vorgeschlagen, den Deichselkopf derart zu gestalten, dass alle Bedienfunktionen mit einer Hand ohne Lösen der Hand vom Griffstück des Deichselkopfes mühelos betätigt werden können, wobei mit dieser Hand eine gleichzeitige Betätigung mehrerer Bedienfunktionen ermöglicht ist. Es werden dazu die benötigten Schalttasten in einer Reihe nebeneinander beidseits des Horns auf geeignet positionierten und vom Horn abfallenden Flächen der Schutzbügel angeordnet, welche mit gestreckten Fingern betätigbar sind.

Ein über die Fahrschaltergriffe steuerbarer Fahrschalter für den Fahrantrieb wird durch Drehung der Fahrschaltergriffe nach rechts oder links um eine horizontale Achse betätigt, die senkrecht zu den vertikal am Horn verlaufenden Außenseiten verläuft und durch eine dort jeweils seitlich gelagerte Drehwelle gebildet wird.

Über von den Schalttasten betätigbare Proportionalschalter ist u.a. eine Steuerung des Heb- und Senkbetriebes des Förderzeugs möglich.

Gemäß der DE 44 44 772 A1 ist ein Deichselkopf mit beidseits des Horns drehbar angelegten Fahrschaltergriffen zur Steuerung des Fahrschalters eines kraftgetriebenen, deichselgelenkten Flurförderzeuges bekannt. Zur Schaffung eines einfach aufgebauten Deichselkopfes werden die am Deichselkopf vorgesehenen Bedienungselemente, z.B. für die Vorwärts- und Rückwärtsfahrt, mit elektrischen Signalgebern in Wirkverbindung gebracht, die innerhalb des Deichselkopfes auf einer gemeinsamen Platine angeordnet sind, die mit einem ein- oder mehrteiligen Kunststoffträger verbunden ist, der über Rastmittel in einer Ausnehmung des Deichselkopfes lösbar gehaltert ist.

Es ist insofern ein Deichselkopf gegeben, welcher gegenüber dem Stand der Technik erheblich weniger Einzelteile aufweist und insofern einfacher aufgebaut ist.

Nachteilig bei der Deichsel mit einem Deichselkopf für kraftgetriebene Flurförderzeuge gemäß der DE 195 23 921 A1 ist, dass die Lagerung und Verbindung der am Horn an der Außenseite beidseitig angelegten Fahrschaltergriffe in konstruktiv einfachster Weise erfolgt, nämlich lediglich über eine in diese flügelradartigen Griffe angelegte enge Bohrung, welche zur Aufnahme eines bloßen Lagerstiftes dient, der den Fahrschaltergriff an der Außenseite der Gehäuseunterseite des Deichselkopfes an der senkrecht dazu verlaufenden Drehwelle befestigen soll.

Die Art des Fahrschalters und besondere zusätzliche Vorrichtungen zur Beaufschlagung des Fahrschalters und zur Verringerung der mechanischen Belastungen der Lagerung der Fahrschaltergriffe sowie des Fahrschalters sind nicht offenbart bzw. gegeben, obwohl die Lagerung der Fahrschaltergriffe in bzw. an einem dünnwandigen bloßen Kunststoffgehäuse des Deichselkopfes erfolgt.

Eine unzulässig hohe mechanische Belastung des Fahrschalters und dessen Fahrschaltergriffe und Stellvorrichtungen, welche beim Auslenken der Fahrschaltergriffe auftreten kann, wird somit nicht verhindert.

Aufgrund dieser hohen mechanischen Belastung des elektrischen Fahrschalters ergeben sich bereits nach kurzem Betrieb des Flurförderzeuges Ungenauigkeiten in der Ansteuerung des Fahrantriebs.

Bei dem Deichselkopf für ein deichselgelenktes Flurförderzeug gemäß der DE 44 44 772 A1 erfolgt die Steuerung der Fahrgeschwindigkeit und des Vor- bzw. Rücklaufes ebenfalls über beidseitig am Horn angeordnete, als Flügelräder bzw. "Schmetterlinge" ausgebildete Fahrschaltergriffe. Diese sind an den seitlich gegenüberliegenden Außenseiten des Deichselhorns auf eine gemeinsame Drehwelle an dessen Enden jeweils aufgesteckt.

Das zur Steuerung des Fahrantriebs vorgesehene Potentiometer steht in Wirkverbindung mit der gemeinsamen Drehwelle der beiden Fahrschaltergriffe, wobei bei Fortführung der Drehbewegung der Fahrschaltergriffe bzw. der Drehwelle eine zum Betätigungsweg (Drehwinkel) proportionale Soll-Fahrgeschwindigkeit durch die Verstellung des Potentiometers vorgegeben wird.

Diese ist aufgrund größerer, nicht ausgeschlossener mechanischer Belastungen der Lagerung der Fahrschaltergriffe sowie der Stellvorrichtung des Potentiometers sowie Übersetzung und der Fehlerhaftigkeit des als Proportionalschalter verwendeten Potentiometers selbst als solche nicht weitgehend reproduzierbar.

Der vorliegenden Erfindung liegt somit die Aufgabe zugrunde, eine Verbesserung der Steuerung der Fahrgeschwindigkeit und des Vor-/Rücklaufes des zu steuernden Flurförderzeuges duch einen verbesserten mechanischen Aufbau der Vorrichtung zur Ansteuerung des Fahrschalters zu erreichen, wobei im wesentlichen ein Aufbau des Deichselkopfes gemäß der DE 195 23 921 A1 gegeben sein soll, insbesondere mit weiterhin seitlich am Horn angeordneten drehbaren Fahrschaltergriffen, und/oder durch Verwendung einer neuen Fahrschalterart, welche weniger anfällig gegen mechanische Belastungen ist und reproduzierbare Steuer- bzw. Regelsignale entsprechend dem jeweiligen Betätigungsweg (Drehwinkel) der Fahrschaltergriffe verlässlich erzeugt.

Diese Aufgabe wird durch die Merkmale des Anspruches 1 gelöst.

Es ist danach insbesondere statt eines durch die Fahrschaltergriffe drehbaren Potentiometers die Verwendung eines induktiven Annäherungsschalters in dem Fahrschalter zur Erzeugung eines zum Drehwinkel der Fahrschaltergriffe (Betätigungsweg) proportionalen Signals zur Steuerung der Fahrgeschwindigkeit und des Vor- und Rücklaufes vorgesehen. Die Anordnung des Annäherungsschalters erfolgt zwischen einem plattenartigen, mit der Drehwelle der Fahrschaltergriffe verbundenen, drehbaren Schaltmagnetträger mit äußerer Steuerfläche, welcher vorzugsweise als drehbarer, gehäuseförmiger Schaltmagnetträger ausgebildet ist, und einer im Abstand seitlich dazu im Deichselhorngehäuse fest angeordneten Leiterplatte. Zur Bildung eines elektromagnetischen Fahrschalters mit einem Magnetsensor in Form eines Hall-Sensors zur Steuerung des Fahrantriebes des Flurförderzeuges ist eine im Deichselkopf lösbar angeordnete Einheit aus der Leiterplatte, Schaltmagnetträger und einem äußeren Schalteinsatzgehäuse angelegt. Dieser Schaltmagnetträger in Form eines z. B. kreissegmentförmigen, plattenartigen Schaltmagnetträgers, ist gegen die Leiterplatte drehbar und auf einer diese und ein vorgesehenes Schalteinsatzgehäuse frei durchsetzenden Drehwelle fest angeordnet. Seitlich am kreisbogenabschnittförmigen Umfangsrand des Schaltmagnetträgers sind ferner zwei geeignet beanstandete, mit dem zwischen sie ragenden Hall-Sensor bei einer Drehung der Fahrschaltergriffe in Wechselwirkung tretende stabförmige Dauermagnete angeordnet.

Zur Verringerung der mechanischen Belastung sind Mittel zur sicheren axialen und radialen Lagerung der Drehwelle im Deichselhorngehäuse und zur freien Lagerung der Leiterplatte und des Schaltmagnetträgers des Fahrtwertgebers zwischen der Drehwelle und einer Auflagerung an der Innenwandung des Deichselhorngehäuseoberteilabschnittes vorgesehen.

Vorzugsweise ist gem. Anspruch 2 der Hall-Sensor auf der Leiterplatte fest angeordnet und zusammen mit dieser somit bei einer Drehung der Fahrschaltergriffe und des Schaltmagnetträgers gegen diese und somit gegen die auf dem Schaltmagnetträger gelagerten, ein veränderliches Magnetfeld für den Hall-Sensor erzeugenden Dauermagnete verstellbar. Gemäß dem Hall-Effekt wird bei einer Drehung des Schallmagnetträgers entsprechend dem Betätigungsweg (Drehwinkel) der Fahrschaltergriffe und der diese Teile verbindenden Drehwelle eine bestimmte Hall-Spannung im Hall-Sensor durch das sich in ihm ändernde Magnetfeld der beiden sich miteinander drehenden, auf dem Schaltmagnetträger vorzugsweise in einem kappenartigen Gehäuse fest zueinander gelagerten Dauermagnete induziert. Diese wird dann als Steuerspannung über einen z. B. integrierten Spannungsregler einer Elektronik zugeführt, welche die Signale zur Aussteuerung des Fahrantriebes, insbesondere für den Vor- und Rücklauf in an sich bekannter Weise erzeugt.

Im Gegensatz zum Spannungsabgriff an einem sich drehenden Potentiometer, welches entsprechend der Größe der Drehung der an einer Drehwelle angeordneten Fahrschaltergriffe um einen bestimmten Winkel zu verstellten ist und einen Schleifkontakt als mechanisch elektrischen Abgriff voraussetzt und nur schwierig an einer Drehwelle exakt um diese um einen kleinen Drehwinkel verstellbar und entsprechend abgreifbar ist, lässt sich die Vorgabe der Steuerspannung über die induzierte Hallspannung des Hall-Sensors praktisch berührungs- und kraftlos ohne elektrischen und mechanischen Kontakt allein durch Drehung eines kleinen leichten Schaltmagnetträgers und der auf diesem in Abstand fest angeordneten, beiden stabförmigen Dauermagnete vornehmen, welche bei Drehung ein veränderliches Feld in dem ein Halbleiterplättchen aufweisenden Hall-Sensor erzeugen. Die Drehwelle der beiden Fahrschaltergriffe wird durch eine vorzugsweise zwischen der Drehwelle unmittelbar selbst und einem unbeweglichen Teil des Deichselkopfes wirkende Rückstellfeder unter ein Rückstellmoment in die Ausgangsdrehstellung gehalten, so dass beim Loslassen der Fahrschaltergriffe die Magnete zusammen mit ihrem Schaltmagnetträger in eine Winkelstellung zurückgedreht werden, in der sich der Hall-Sensor in einem Magnetfeld entsprechend der Ausgangsdrehstellung befindet, wobei insofern keine zusätzliche Hallspannung induziert wird. Da die Rückstellfeder nicht unmittelbar auf den Schaltmagnetträger wirkt, sind die bei einer Verstellung der Fahrschaltergriffe sich einstellenden mechanischen Belastungen an diesen gering.

Um nun eine fehlerhafte Ansteuerung des Fahrantriebes aufgrund eines ohne ausgeführte Drehung des Magnetträgers möglicherweise sich bereits ergebenden Steuersignals des Hall-Sensors zu verhindern, ist zwischen Schaltmagnetträger und Leiterplatte zusätzlich ein Sicherheitsschalter angelegt.

Dazu sind die beiden Magnete des Schaltmagnetträgers mit einem kappenartigen, einem Schaltnocken aufweisenden Gehäuse abgedeckt, wobei von unten in dieses und somit zwischen die Magnete durch einen in dem plattenförmigen Schaltmagnetträger angelegten kreisbogenförmigen Führungsschlitz der mit seinem Kopf und seinen Montagebeinchen von der Leiterplatte vorstehende Hall-Sensor ragt. Gegenüberliegend zum kappenartigen Gehäuse ist ein Mikroschalter auf der am Deichselkopf fest gelagerten Leiterplatte angelegt, welcher einen auf das kappenartige Gehäuse vorstehenden, verschwenkbaren Steuernocken aufweist. Dieser steht immer in Eingriff mit einer an der Außenseite des kappenartigen Gehäuses, nämlich entlang dem dortigen kreisbogenförmigen Umfangsrand des Schaltmagnetträgers verlaufenden Steuerfläche, auf welcher eine Schaltkerbe entsprechend der Ausgangsdrehstellung bzw. der in der Ausgangsdrehstellung gegebenen Größe der Hall-Spannung positioniert ist. Der verschwenkbare Steuernocken gelangt bei einer Drehung der Fahrschaltergriffe nach rechts und links, also bei einer Verschwenkung über die Ausgangsdrehstellung in und außer Eingriff mit der Schaltkerbe, wobei bei Eingriff mit der Schaltkerbe grundsätzlich kein Fahrsignal zur Ansteuerung der Fahrgeschwindigkeit des Elektroflurförderzeuges weitergegeben wird, selbst wenn dies am Hall-Sensor anstehen sollte. Insofern ist ausgeschlossen, dass ein Signal des Hall-Sensors, wenn dieses fehlerhaft trotz fehlender Drehung von diesem ausgeht, etwa weil ein Kontakt des Hall-Sensors abgebrochen ist oder dieser zwischen den beiden Magneten falsch in der Ausgangsdrehstellung positioniert ist, die Fahrgeschwindigkeit fälschlicherweise beeinflusst.

Eine Verbesserung des mechanischen Aufbaus zur Führung und Lagerung und damit auch zur Ansteuerung des Fahrschalters ergibt sich gem. Anspruch 3 insofern, als der Fahrschalter des Fahrtwertgebers durch eine als Vierkantstift ausgebildete durchgehende Drehwelle mit den beiden zur Steuerung der Fahrgeschwindigkeit um bestimmte Drehwinkel zu verstellenden Fahrschaltergriffen verbunden ist. Das Gehäuse des Deichselkopfes ist zudem so gestaltet, dass beim Auslenken der Fahrschaltergriffe eine mechanische Beanspruchung des Fahrschalters weitgehend ausgeschlossen ist. Die Lagerung der Drehwelle erfolgt an ihren Endabschnitten in von zwei gegenüberliegenden Außenwandungen des Deichselkopfes gebildeten Lagerschalen, in welchen jeweils eine Durchgangsbohrung mit einem Außenlager (Lagerbuchse) für die Drehwelle angelegt ist. Des weiteren sind besondere Führungen und mechanische Anschläge für die Fahrschaltergriffe an den Außenseiten der Lagerschalen vorgesehen. Radial außerhalb, konzentrisch um die dortigen beiden Außenlager ist über einen Kreisbogenabschnitt mit bestimmtem maximalem Winkelbereich von z.B. ± 30°, entsprechend dem vorgesehenen maximalen Betätigungsweg bzw. der Verschwenkung der Fahrschaltergriffe um einen entsprechenden Drehwinkel von z.B. ± 30°, eine Führungsnut in den Lagerschalen angelegt, welche sich zu deren Außenseiten öffnet und in welche jeweils ein in axialer Richtung von den Fahrschaltergriffen nach innen gerichteter Anschlagbolzen ragt. Es ergibt sich insofern eine exakte Führung der Fahrschaltergriffe in Umfangsrichtung, wobei sich eine Belastung der Drehwelle in radialer Richtung aufgrund der zusätzlichen äußeren Führung über die in die Führungsnut zusätzlich eingreifenden Anschlagbolzen erheblich verringert. Zusätzlich erfolgt eine radiale und axiale Lagerung der Drehwelle außer in den in den Lagerschalen angelegten Außenlagern auch unmittelbar über Innenlager, welche zur Lagerung der die Leiterplatte und das äußere Schalteinsatzgehäuse des Schalteinsatzträgers durchsetzenden Drehwelle und des auf diesen Teilen angelegten Fahrschalters vorgesehen sind.

Bei der Ausbildung der Drehwelle als Mehrkantstift, z.B. mit quadratischem Querschnitt gem. Anspruch 3, erfolgt auf diesem zur Ermöglichung einer drehbaren Lagerung in den Lagerbuchsen der Leiterplatte und des Schalteinsatzgehäuses die Anordnung zweier aufzusteckender Buchsenstopfen, welche außen entsprechend der Ausnehmung der Lagerbuchsen bemessen und rund sind und somit in den Lagerbuchsen drehbar sind. Zusätzlich erfolgt eine entsprechende Lagerung der Endabschnitte des Mehrkantstiftes über Lagerbuchsen und Buchsenstopfen zumindest in den beiden Außenlagern des Deichselhorngehäuses. Da die Leiterplatte und das an ihr befestigte Schalteinsatzgehäuse fest in einer Aufnahme im Inneren des Deichselhorngehäuses zwischen dessen Ober- und Unterteil gelagert und genau mit ihren Lagerbuchsen zu den Lagerbuchsen des Außenlagers ausgerichtet sind, ergibt sich eine zueinander zentrierte Lagerung der Drehwelle bzw. des Mehrkantstiftes über mindestens vier zueinander beabstandete Lagerabschnitte.

Der von der Drehwelle geführte, auf diese fest angeordnete plattenförmige Schaltmagnetträger wird in einer zur Leiterplatte beabstandeten und zu dieser parallelen Ebene bei einer Drehung exakt geführt, womit der von der Leiterplatte in Richtung auf den Schaltmagnetträger vorstehende Hall-Sensor exakt zwischen die beiden auf diesem Schaltmagnetträger in Abstand fest angeordneten, mit diesem drehbaren Dauermagnete ragt. Obwohl es sich um Dauermagnete handelt, ergibt sich bei einer Drehung des Schaltmagnetträgers mit den fest auf diesem angeordneten Magneten am Ort des sich nicht mitdrehenden Hall-Sensors ein veränderliches Magnetfeld. Eine Fehlfunktion des Hall-Sensors während oder nach der Drehung der Fahrschaltergriffe lässt sich durch den zusätzlich vorgesehenen Mikroschalter mit Steuernocken vermeiden, welcher an der äußeren Steuerfläche des kappenartigen Gehäuses zur Anlage kommt, welches auf dem Schaltmagnetträger gelagert ist und die als Schaltmagnete wirkenden Dauermagnete oder zumindest den zwischen diese ragenden Teil des Hall-Sensors umgibt.

Gem. Anspruch 4 und 5 ist die Ausbildung des Deichselkopfes und Deichselhorngehäuses aus einem Gehäuseunterteil und -oberteil vorgesehen. In diesen Gehäuseteilen wird eine gemeinsam gebildete Aufnahme für die Leiterplatte und das Schalteinsatzgehäuse u.a. durch geeignet zueinander beabstandete Fixierrippen und Längsnuten sowie zusätzliche Halterungen und Anschläge gebildet. Seitlich an den Außenwandungen des Gehäuseoberteils sind die Lagerschalen mit Lagerbuchsen für an den Endabschnitten der Drehwelle angelegte Buchsenstopfen vorgesehen. Diese werden durch Ansätze der Fahrschaltergriffe gebildet. Zur zusätzlichen Führung und Zentrierung der Fahrschaltergriffe ist an deren Innenseite ein nach innen vorspringender, sich parallel zur Drehwelle erstreckender Anschlagbolzen angelegt, der in die erwähnte koaxial zur Drehwelle angelegte Führungsnut an der Außenseite der Seitenwandung des Gehäuseoberteils eingreift. Durch die Länge der Führungsnut ergibt sich gleichzeitig eine Begrenzung des Drehwinkels der Fahrschaltergriffe.

Es ergibt sich insbesondere bei Ausbildung der Außen- und Innenlager gem. Anspruch 6 eine präzise axiale und radiale Lagerung der Drehwelle und des mit dieser geführten Schaltmagnetträgers.

Die Erfindung wird im folgenden anhand zweier bevorzugter Ausführungsformen unter Bezug auf deren Zeichnungen näher erläutert.

In den Zeichnungen zeigen:
- Figur 1a:: Eine perspektivische Ansicht einer ersten bevorzugten Ausführungsform des Deichselkopfes, gesehen in Richtung auf dessen Deichselhorn und die beiden dazu seitlichen Schutzbügel mit Grifföffnungen;
- Figur 1b:: Eine Draufsicht auf das gesamte Gehäuseunterteil des Deichselkopfes, einschließlich des Abschnittes des Deichselhorns;
- Figur 1c:: Eine Draufsicht auf das bloße, das Deichselhorn mitbildende Gehäuseoberteil des Deichselkopfes, wobei in Lagerschalen seitlich quer durch die unteren Wandungsbereiche des Deichselhorns die Drehwelle der Fahrschaltergriffe des Fahrtwertgebers anzuordnen ist;
- Figur 2:: Eine Draufsicht auf das Gehäuseunterteil und auf zwei an ihm anzuordnender Schalttasten einer zweiten Ausführungsform des Deichselkopfes unter Darstellung einer mittig im
Bereich unterhalb des Deichselhorns sich erstreckenden unteren Aufnahme zur freien Lagerung des Schalteinsatzgehäuse und der Leiterplatte des Fahrschalters im Gehäuse;
- Figur 3:: Eine Draufsicht auf das Gehäuseoberteil des Deichselkopfes, welches das Gehäuseunterteil des Deichselkopfes gemäß Figur 2 ergänzt, unter Wiedergabe zu verwendender Schalttasten und der von zwei gegenüberliegenden Außenwandungen des Deichselkopfgehäuses gebildeten Lagerschalen zur Anordnung der aus einem Mehrkantstift gebildeten Drehwelle und der an den dortigen Wellenenden befestigten, zur Betätigung des Fahrschalters dienenden Fahrschaltergriffe;
- Figur 4:: Eine Gegenüberstellung von Gehäuseunterteil- und -oberteil gemäß Figur 2 und 3, insbesondere unter Darstellung der an der Drehwelle zu befestigenden Fahrschaltergriffe und des auf einer rechteckigen Leiterplatte angeordneten Fahrschalters des Fahrtwertgebers;
- Figur 5:: Eine Darstellung des prinzipiellen Aufbaus und der Anlage des Fahrtwertgebers im inneren unteren Bereich des Deichselhorns, bestehend aus einer um bestimmte Winkelbereiche um eine Nullstellung verschwenkbaren Drehwelle mit zwei äußeren Fahrschaltergriffen, zwei Außenlagern und zwei Innenlagern sowie Halterungen für die elektromechanische Baugruppe zur Bildung des Fahrschalters mit Hall-Sensor und einem mit der Drehwelle verschwenkbaren plattenförmigen Schaltmagnetträger des Fahrtwertgebers;
- Figur 6:: Eine Querschnittsansicht entsprechend der Schnittlinie AB der Figur 5 durch den Gehäuseoberteilabschnitt des Deichselhornes und durch das Schalteinsatzgehäuse des Fahrschalters in Richtung auf den Schaltmagnetträger und Hall-Sensor und die diese Teile tragende Leiterplatte;
- Figur 7:: Eine unmittelbare Draufsicht auf die Leiterplatte und den dort angelegten Fahrschalter, auf welcher zur Erzeugung eines Regelsignals für die Fahrgeschwindigkeit des zu steuernden Flurförderzeuges als verschwenkbarer kreissegmentförmiger plattenförmiger Schaltmagnetträger für einen Hall-Sensor gemäß Figur 5 und 6 nunmehr ein entsprechend verschwenkbarer, gehäuseförmiger Schaltmagnetträger angeordnet ist, wobei das Steuersignal des Hall-Sensors mittels eines verschwenkbaren Steuernockens eines beabstandet angeordneten Mikroschalters kontrollierbar ist;
- Figur 8:: Eine vergrößerte Seitenansicht der bestückten Leiterplatte entsprechend Figur 7, insbesondere unter Darstellung einer elektrischen Baugruppe zur Aufarbeitung der Werte der Spannungsversorgung und der Umwandlung der Ausgangswerte des Hall-Sensors in ein Serielles- bzw. Bus-Signal zur Ansteuerung des Motors des Elektrofahrzeuges;
- Figur 9:: Eine schematische Darstellung der Lagerung der Fahrschalterdrehwelle und des Aufbaus des Fahrschalters mit bloßem gehäuseförmigen Schaltmagnetträger zur Aufnahme der Dauermagnete und des zwischen diese ragenden Hall-Sensorkopfes mit äußerer Steuerfläche statt des in der Ausführungsform gemäß Figur 5 und 6 verwendeten plattenförmigen Schaltmagnetträgers;
- Figur 10:: Eine Querschnittsansicht gemäß der Schnittlinie EF in Figur 9 unter Darstellung des Fahrschalters mit bloßem gehäuseförmigen Schaltmagnetträger;
- Figur 11a, b, c,: d, e:: Unterschiedliche Ansichten und Schnitte des im Fahrschalter gemäß Figur 7-10 verwendeten gehäuseförmigen Schaltmagnetträgers;
- Figur 12:: Eine bloße Darstellung der Ausbildung der Lagerschale für die den Fahrschalter verstellenden Drehwelle an der linken Außenseite des Deichselhorns, in welcher im unteren Bereich wie in der dazu parallel angelegten gegenüberliegenden Außenseite eine Durchgangsbohrung zur Anlage eines Außenlagers für die Drehwelle der Fahrschaltergriffe mündet, um welche eine außen konzentrisch im Abstand verlaufende Führungsnut für einen von der Innenseite der Fahrschaltergriffe in axialer Richtung abstehenden Anschlagbolzen angelegt ist;

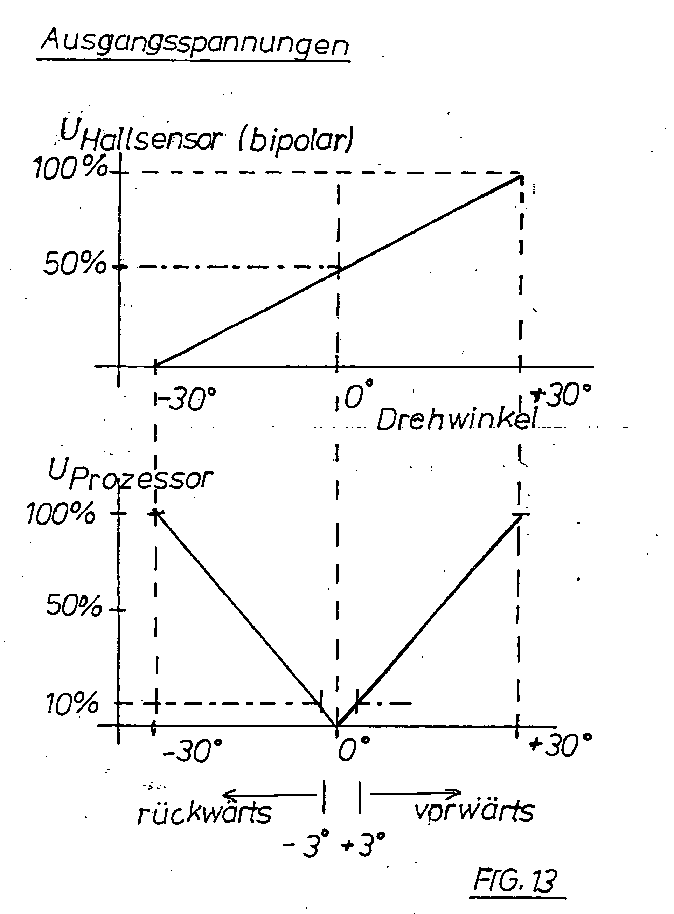

- Figur 13:: Ein Diagramm unter Darstellung der Änderung der Ausgangsspannung des Hall-Sensors bei einer Drehung der Fahrschaltergriffe um bis zu ± 30 ° gegenüber deren Ausgangsdrehstellung bei stehendem Fahrzeug.

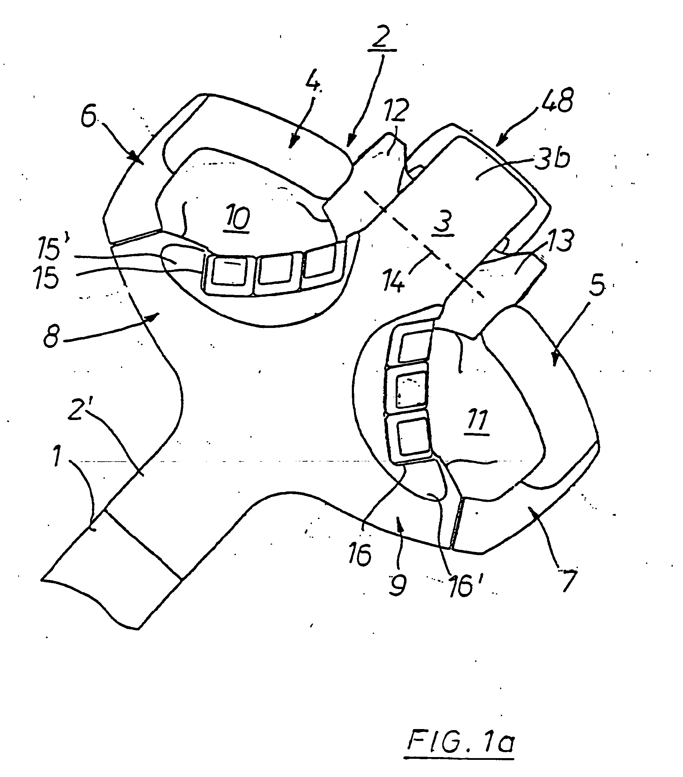

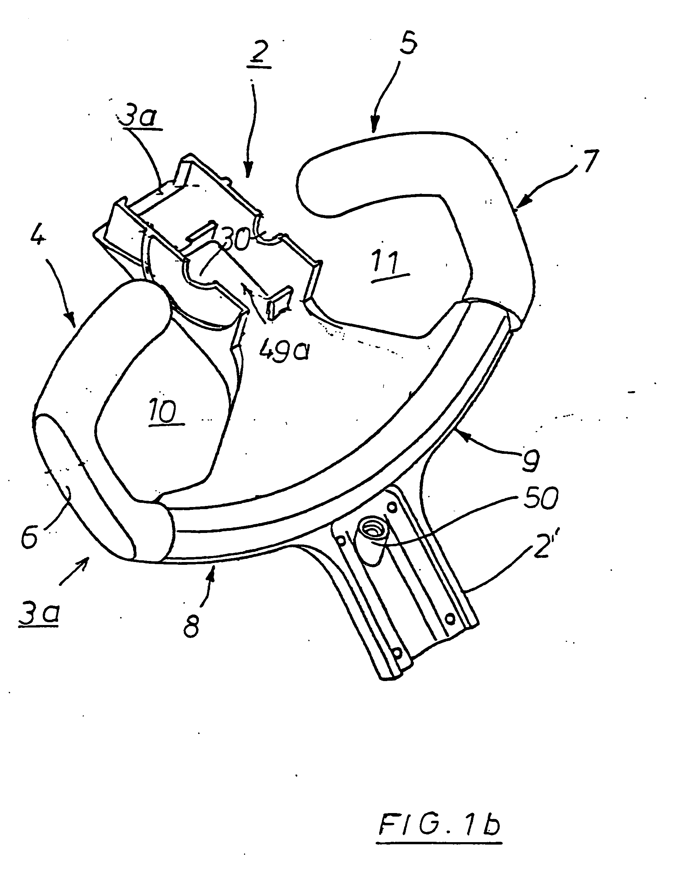

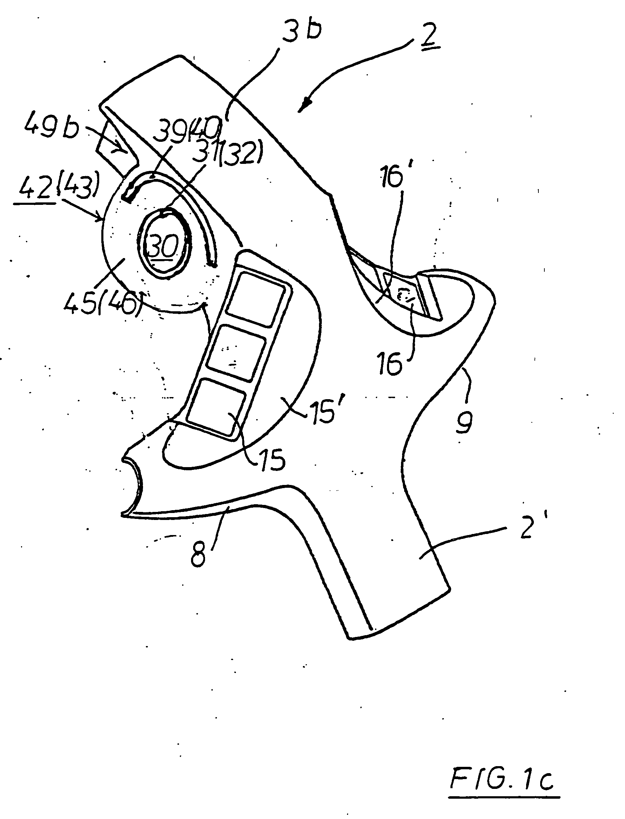

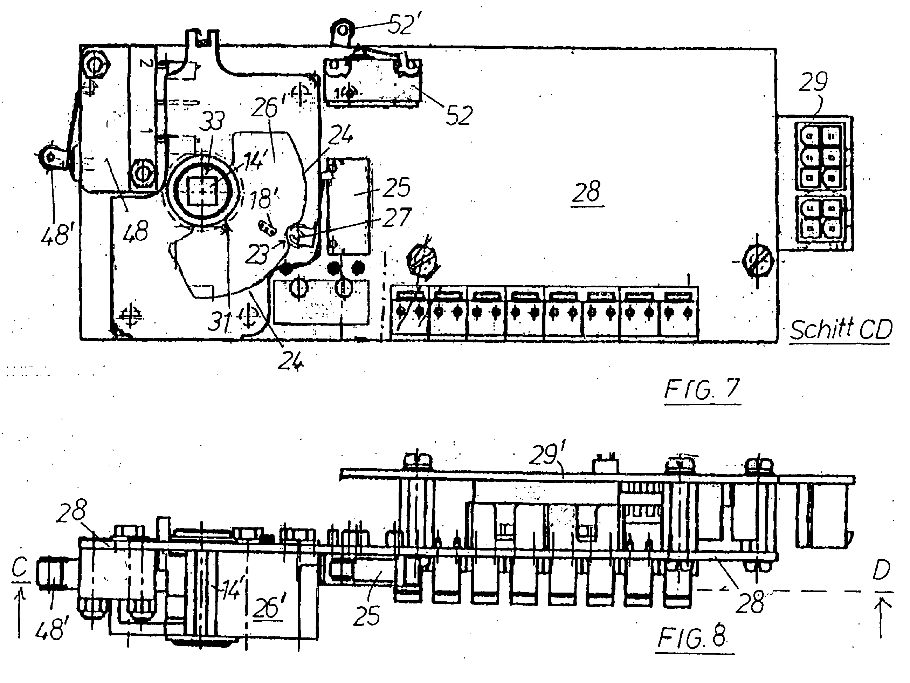

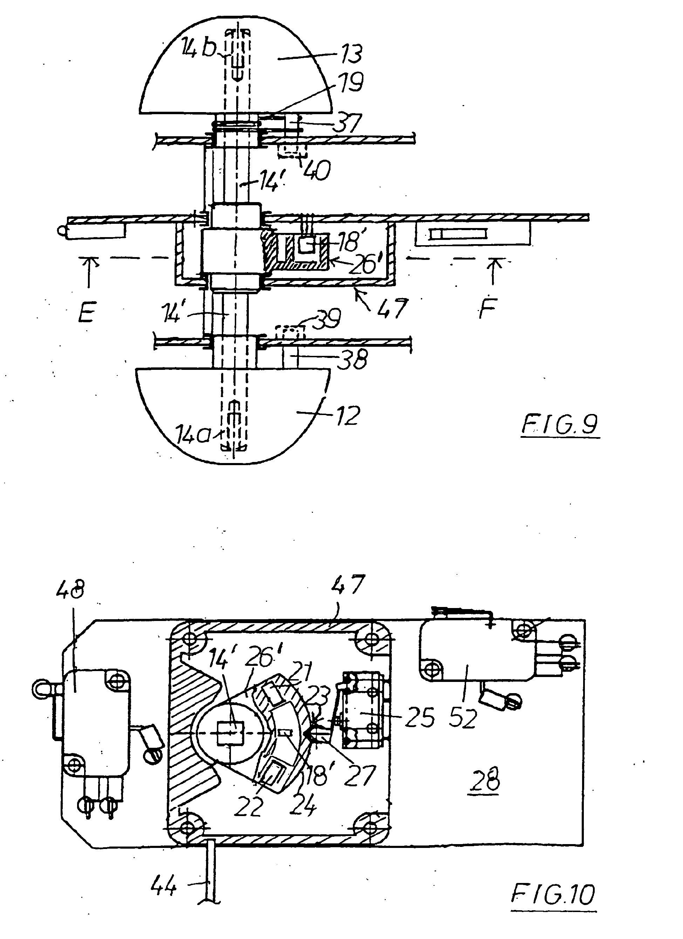

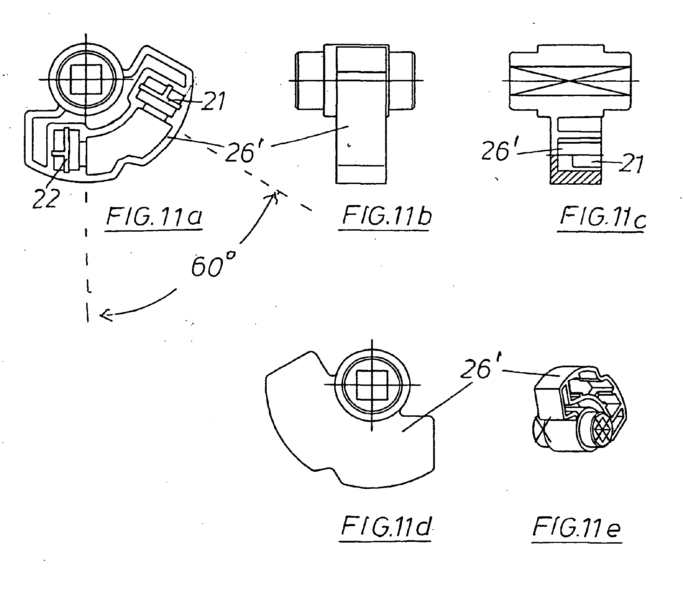

Die beiden Ausführungen des Deichselkopfes gem. den Figuren 1a,b,c und 2-12 unterscheiden sich im wesentlichen nur in der Anlage der Schrägflächen bzw. Muldenflächen (15', 16') zur Lagerung der Schalttasten (15, 16) im Bereich des Deichselhorns (3), wobei die gem. der ersten Ausführungsform nach Fig. 1a,b,c vorgesehenen Muldenflächen nicht nur eine Neigung zu Griffstücken (4,5) des Deichselhornes aufweisen, sondern auch seitlich nach außen zu Schenkelabschnitten (6, 7) der Griffstücke (4, 5) geneigt sind. Ansonsten wird jeweils zwischen Gehäuseunterteil- und Gehäuseoberteilabschnitt (3a, 3b) des Deichselhorns eine Aufnahme (49a,49b) zur Lagerung des Fahrschalters (18) eines Fahrwertgebers (17) gebildet, wobei die Lagerung der Drehwelle (14) zweier Fahrschaltergriffe (12, 13) jeweils in seitlichen Lagerschalen (45,46) im unteren Bereich des Gehäuseoberteilabschnittes (3b) des Deichselhorns erfolgt. Der Fahrtwertgeber (17) weist auch in der Ausführung gemäß Figur 1 a, b, c, einen im Fahrschalter (18) angelegten Magnetschalter mit Hall-Sensor (18') gemäß Figur 8-10 auf.

Es sind insofern für beide Ausführungsformen jeweils dieselben Bezugsziffern gewählt.

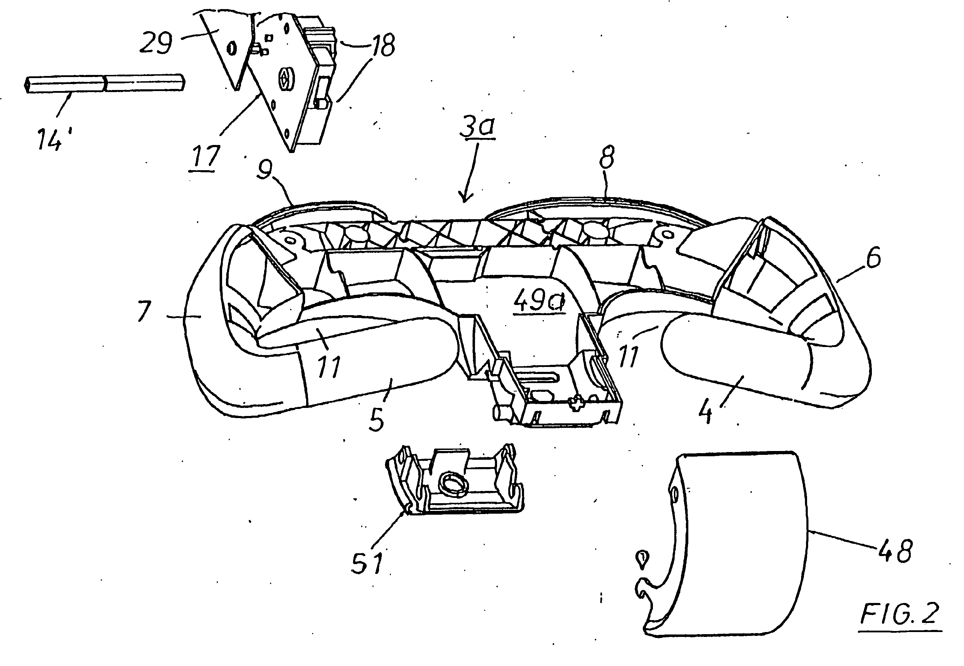

Der in den Figuren 1 a,b,c dargestellte Deichselkopf (2) wie auch die zweite Ausführungsform gem. den Figuren 2-12 gehört jeweils zu der durch den Deichselstiel (1) angedeuteten Deichsel eines nicht dargestellten Elektroflurförderzeuges. Der Deichselkopf (2) weist in Verlängerung des Deichselstiels (1) jeweils ein Deichselhorn (3) auf, das in Draufsicht gem. Fig. 1a annähernd Rechteckform hat, dagegen in Seitenansicht gem. Fig. 1c nach oben eine Buckelform. An der Unterseite ist das Deichselhorn (3) in dieser Seitenansicht bis auf nach unten vorstehende Lagerschalen (45,46) konkav.

Während die Figuren 1b und 1 c jeweils nur das Gehäuseunterteil (3a) bzw. das Gehäuseoberteil (3b) des Deichselkopfes zeigen, ist gem. Fig. 1a der Deichselkopf in zusammengebautem Zustand mit allen Schalttasten (15, 16) sowie den seitlich des Deichselhorns (3) angelegten Fahrschaltergriffen (12, 13) wiedergegeben. Dabei ist auch ein Körperschutzschalter (48) dargestellt, welcher sich an der Stirnseite des Deichselhorns (3) befindet. Dieser ist wie üblich so gelagert, dass eine Berührung aus den verschiedensten Richtungen zu einer Schalterbetätigung führt und das Elektroflurförderzeug sich in entgegengesetzter Richtung von der dieses betätigenden Person weg bewegt.

Am Deichselhorn (3) bzw. an dem Verbindungsstück (2') zum Deichselstiel (1) sind jeweils an der rechten und linken Seite seitlich abgehende Trägerabschnitte (8, 9) angelegt, die sich nach außen hin verjüngen. An den Enden dieser Trägerabschnitte (8, 9) sind jeweils Schenkelabschnitte (6, 7) angelegt, die sich annähernd parallel zum Deichselhorn (3) hin zu dessen Bedienerseite erstrecken und unter einer erneuten Abbiegung von ca. 90° in die stangenförmigen Griffstücke (4,5) übergehen, welche mit ihren Enden an den Seitenwandungen (42,43) des Deichselhorns (3) seitlich außerhalb der Fahrschaltergriffe (12, 13) zu liegen kommen.

Es werden insofern jeweils seitlich des Deichselhorns (3) Schutzbügel mit mittigen Grifföffnungen (10, 11) gebildet, so dass die Griffstücke (4, 5) jeweils mit einer Hand voll umfasst werden können und mit ausgestrecktem Zeigefinger die Schalttasten (15, 16) an den im Übergang zwischen Deichselhorn (3) und den Trägerabschnitten (8, 9) gebildeten Muldenflächen (15', 16') erreichbar sind.

Die Fahrschaltergriffe (12, 13) sind mit ihrer Drehwelle (14) um eine Achse senkrecht zu den mit Lagerschalen (45, 46) ausgebildeten Seitenwandungen (42,43) des oberen Bereiches des Deichselhorns drehbar gelagert. Der Verlauf der Drehachse entspricht annähernd der Achse der Griffstücke (4, 5) nahe den Fahrschaltergriffen (12, 13). Man erkennt, dass aufgrund dieser Ausbildung über die Grifföffnungen (10, 11) eine Hand die Griffstücke (4,5) von hinten und schräg oben erfassen kann. Die Grifföffnungen (10, 11) haben die größte Breite in der Ebene der Schenkelabschnitte (6, 7) und der Griffstücke (4, 5).

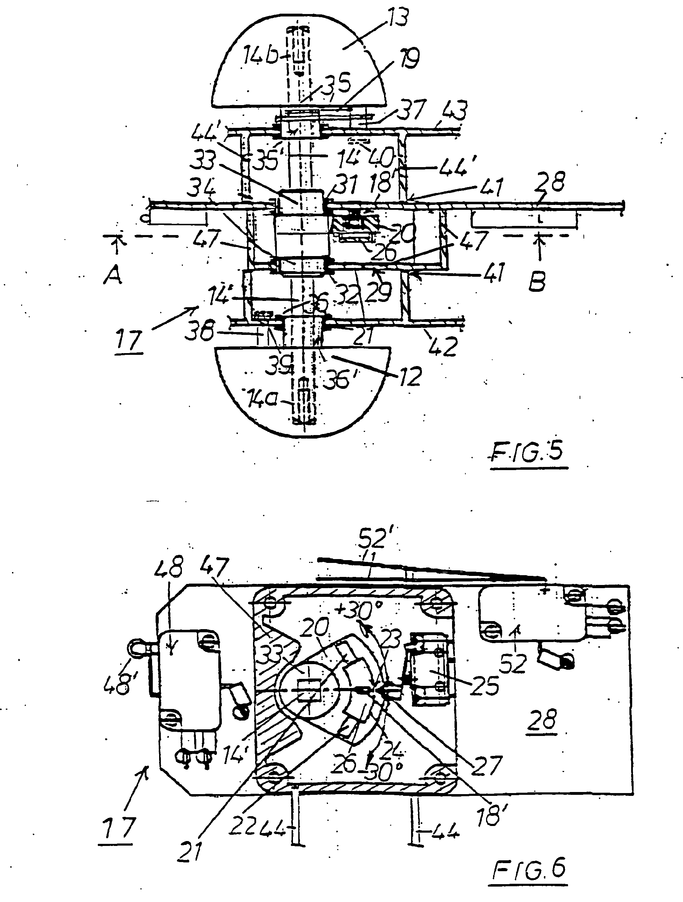

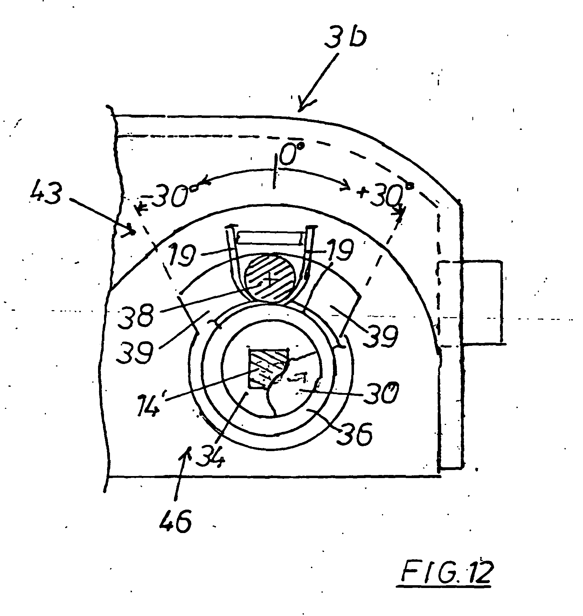

Die Aufnahmen (49a, 49b) zur Lagerung des im Detail in Fig. 5, 6, 7 und 8 dargestellten Fahrtwertgebers (17), welcher in einem Schalteinsatzgehäuse (47) aufgenommen wird und die Fahrgeschwindigkeit und den Vor- und Rücklauf des Elektroflurförderzeuges steuert, sind jeweils in dem Gehäuseunterteil- (3a) und dem Gehäuseoberteilabschnitt (3b) des Deichselhorns angelegt. In Fig. 1c erkennt man insbesondere die Ausbildung der Lagerschalen (45, 46) an den Seitenwandungen (42, 43) des Gehäuseoberteilabschnittes des Deichselhorns (3). Zur Begrenzung der Winkelverstellung der die Drehwelle (14) verstellenden Fahrschaltergriffe (12, 13) und zur Stabilisierung der Lagerung der Drehwelle sind, wie später ausgeführt wird, in den Lagerschalen (45, 46) Führungsnuten (39, 40) angelegt, welche sich konzentrisch um die für den Durchgang der Drehwelle (14') angelegten Durchgangsbohrungen (30) erstrecken. (Figur 12)

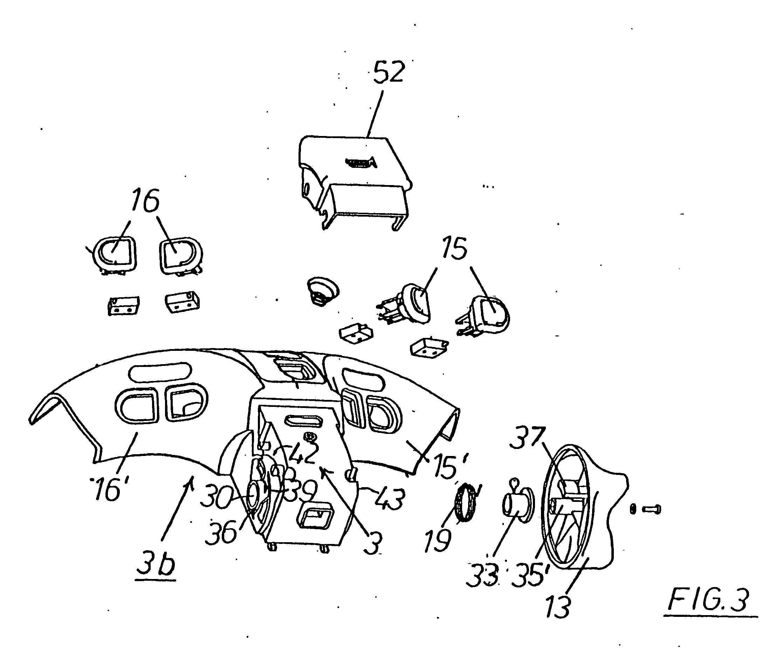

In den Durchgangsbohrungen (30) sind jeweils Lagerbuchsen (35, 36) vorgesehen, über welche die drehbare Lagerung der Drehwelle (14) mittels auf dieser vorgesehenen Buchsenstopfen (35', 36')erfolgt. (Figur 3, 4, 5, 6, 9, 10, 12)

In Fig. 1a ist die Drehwelle (14) durch Einzeichnung der entsprechenden Drehachse angedeutet.

Der Deichselkopf (2) und der Gehäuseunterteil- (3a) und Gehäuseoberteilabschnitt (3b) des Deichselhorns (3) sind in beiden Ausführungsformen jeweils aus Kunststoff hergestellt, wobei das Gehäuseunterteil und Gehäuseoberteil des Deichselkopfes jeweils als Hohlform geblasen ist, welche bis in die Griffstücke (4, 5) seitlich des Deichselhorns übergehen.

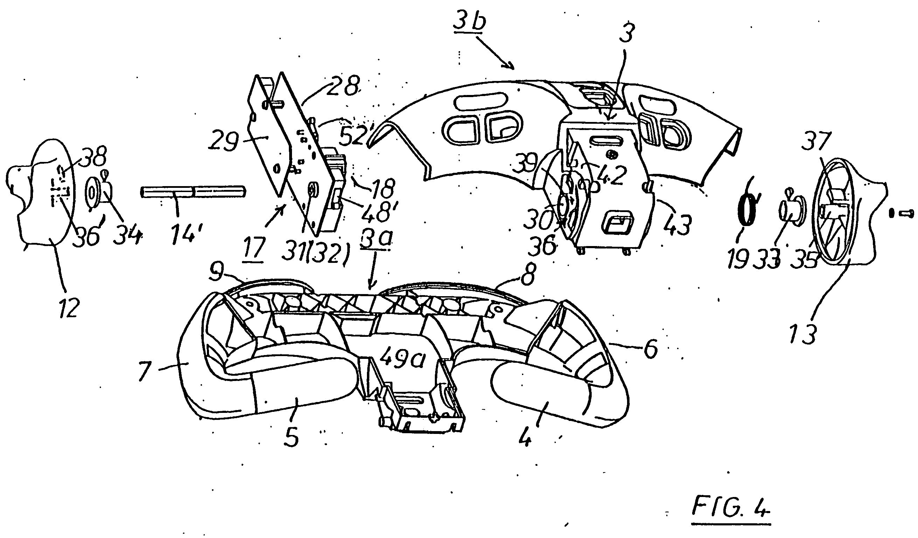

Zur Stabilisierung der Wandungen dieser Gehäuseteile sind, wie in Fig. 2 und 4 in der Draufsicht auf das Gehäuseunterteil des Deichselkopfes der zweiten Ausführungsform gezeigt, dort im Inneren jeweils sich kreuzende Querwandungen angelegt, wobei dies insbesondere im Bereich der in dieser zweiten Ausführungsform eine große Breite aufweisenden Trägerabschnitte (8,9) gilt.

In der Gegenüberstellung von Gehäuseunterteil und Gehäuseoberteil des Deichselkopfes gemäß Fig. 4 sind in gesprengter Darstellung der linke Fahrschaltergriff (12), die als Mehrkantstift (14') ausgebildete Drehwelle (14) und der Fahrschalter (18) des Fahrtwertgebers (17) dargestellt. Das Schalteinsatzgehäuse (47) des Fahrschalters (18), das den plattenförmigen Schaltmagnetträger (20) mit dem kappenartigen Gehäuse (26) und die Dauermagnete 21, 22 eines Magnetsensors schützend umgibt, besteht aus zwei zueinander parallel angeordneten Platten, nämlich einer gegenüber dem Deichselhorngehäuse (3a, 3b) frei gelagerten, aber unverstellbaren, mit zur Anordnung des Magnetsensors dienenden Leiterplatte (28) und aus einer zweiten, als Gehäusedeckel oder auch als Lagerabschnitt für eine zusätzliche Rückstellfeder (19) dienenden ebenfalls unverstellbaren Lagerplatte (29), welche ein Schalteinsatzgehäuse (47) bilden, das den Schaltmagnetträger (20) und die dortigen Schaltmagnete umgreift.

Auf der rechten Außenseite der Leiterplatte (28) erkennt man den Aufbau des aus einem Hall-Sensor (18') und zwei stabförmigen Dauermagneten (21, 22) gebildeten Magnetsensors des Annäherungsschalters, welcher einen zum Verstellweg der Fahrschaltergriffe (12, 13) proportionales Signal erzeugt, sobald diese gedreht werden.

Die als Mehrkantstift (14') ausgebildete Drehwelle (14) ist über die auf ihrer Außenseite im Bereich der Leiter- und Lagerplatte (28, 29) angeordneten Buchsenstopfen (33, 34) in Lagerbuchsen (31, 32) drehbar angeordnet, wobei die Lagerbuchsen (31, 32) in Durchgangsbohrungen der Leiterplatte (28) bzw. des Schalteinsatzgehäuses (47) angelegt sind. ( Figur 5 )

Die Anlage des die Dauermagnete (21, 22) tragenden, plattenförmigen, mit dem Mehrkantstift (14') zusammen drehbaren Schaltmagnetträgers (20) ergibt sich aus den Figuren 5, 6, und die zum gehäuseförmigen Schaltmagnetträger (26') aus den Figuren 7 und 8.

Der Schaltmagnetträger (20) ist seitlich der Leiterplatte (28) in einer Ebene parallel zu dieser verschwenkbar, wobei die Leiterplatte (28) im Gegensatz zu dem Schaltmagnetträger (20) drehfest und ortsfest im Deichselhorngehäuse gelagert ist.

Der auf der Leiterplatte (28) gelagerte Hall-Sensor (18') steht mit seinem vom Magnetfeld zu durchflutenden Halbleiterplättchen von dieser seitlich in

Richtung auf den Schaltmagnetträger (20) vor und durchsetzt diesen mit seinem Kopf in einem kreisförmigen Führungsschlitz, so dass wie in der Draufsicht gem. Fig. 6 gezeigt, der Kopf des Hall-Sensors zwischen die beiden Dauermagnete (21, 22) ragt und innerhalb eines kreisbogenabschnittförmigen kappenartigen Gehäuses (26) zu liegen kommt, welches insofern den Hall-Sensor (18') nach außen zusätzlich schützt.

Da die Dauermagnete (21, 22) sich zusammen mit dem kreissegmentförmig ausgebildeten Schaltmagnetträger (20) relativ zum Kopf des Hall-Sensors (18') bei einer Verschwenkung der Fahrschaltergriffe (12, 13) entsprechend nach rechts oder links drehen, gelangt insofern der Kopf des Hall-Sensors (18') je nach Größe der Drehung in ein unterschiedliches Magnetfeld, so dass in diesem eine entsprechend dem Drehwinkel unterschiedliche Hall-Spannung induziert wird, welche als Signal zur Ansteuerung des Motors des Elektroflurförderzeuges dient.

Das mit seiner Außenseite am kreisbogenförmigen Rand des Schaltmagnetträgers (20) verlaufende kappenartige Gehäuse (26) bildet mit dieser zur Außenseite des Schaltmagnetträgers (20) gerichteten Seite eine Steuerfläche (24), auf welche mittig eine Schaltkerbe (23) eingelassen ist. Gegen diese Schaltkerbe (23) kommt ein von einem benachbarten Mikroschalter (25) vorstehender, verschwenkbarer Schaltnocken (27) zur Anlage, sofern die Fahrschaltergriffe (12, 13) bzw. der Schaltmagnetträger (20) sich in ihrer Ausgangsstellung befinden, also die Verstellung um einen Drehwinkel +/- Null ist.

Der Mikroschalter (25) kontrolliert insofern die Ausgangsstellung und bildet einen Sicherheitsschalter, wobei nur bei ausgelenktem Schaltnocken (27) ein anstehendes Fahrsignal des Hall-Sensors (18') zur Ansteuerung der Fahrgeschwindigkeit des Elektroflurförderzeuges freigeben wird. Insofern wird eine Ansteuerung verhindert, sofern ein Fehlsignal vom Hall-Sensor ausgeht, sei es, dass dieser z.B. beschädigt ist oder die Justierung des Hall-Sensors entsprechend der Ausgangsdrehstellung der Drehwelle nicht vorschriftsmäßig erfolgte, das Steuersignal des Hall-Sensors also vor- oder nacheilt.

Gemäß Figur 7 und 8 ist der Fahrschalter (18) insofern gegenüber dem nach Figur 6 und 7 abgeändert, als kein zusätzlicher plattenförmiger drehbarer Schaltmagnetträger (20) verwendet ist, sondern das dortige kappenartige Gehäuse (26) selbst als drehbarer Schaltmagnetträger (26') mit äußerer Steuerfläche (24) und Schaltkerbe (23) ausgebildet ist. An den äußeren Enden des ein äußeres bogenförmiges Gehäuse aufweisenden Schaltmagnetträgers sind in diesem in Abstand fest zueinander gelagert die Dauermagnete (21, 22) des Hall-Sensors (18') angelegt, zwischen denen der Kopf des Hall-Sensors mit seinem Sensorplättchen vorragt.

Die Lagerung der als Mehrkantstift (14') ausgebildeten Drehwelle (14) erfolgt, wie erwähnt, außen über Durchgangsbohrungen (30) in den Seitenwandungen (42, 43) des Deichselkopfgehäuses oder in dort speziell angelegte Lagerschalen (45, 46). In den Durchgangsbohrungen (30) werden Außenlager aus dort eingelassenen Lagerbuchsen (35, 36) und aus auf dem Mehrkantstift (14') aufgesetzten Buchsenstopfen (35', 36') gebildet.

Es erfolgt insofern eine Lagerung des Mehrkantstiftes (14') über vier zueinander beabstandete Lagerabschnitte, nämlich zwei Innenlager und zwei Außenlager. Zusätzlich erfolgt eine Stabilisierung der Lagerung dieses Mehrkantstiftes (14') durch auf der Innenseite der Fahrschaltergriffe (12, 13) angelegte, axial nach innen vorstehende Anschlagbolzen (37, 38), welche in die Führungsnuten (39, 40) eingreifen, welche radial außerhalb, koaxial zur Durchgangsbohrung (30) jeweils auf der Außenseite der Lagerschalen (45, 46) angelegt sind (s. insofern die Schnittdarstellung gem. Fig. 12). Diese Führungsnuten (39, 40) sind nur über einen Winkelabschnitt entsprechend dem vorzugebenden maximalen Verschwenkungswinkel der Fahrschaltergriffe (+/- 30°) geführt. Es ergibt sich insofern zusätzlich eine automatische Beschränkung der zulässigen Verschwenkung der Fahrschaltergriffe, wobei bei einer Verschwenkung um einen Winkelbereich von bis zu +30° der Fahrtwertgeber (17) derart ansteuert, dass sich eine Vorwärtsbewegung des Flurförderzeuges ergibt, und bei ein Verschwenkung von bis zu -30° sich das Flurförderzeug in Rückwärtsbewegung setzt.

Die Anforderungen an einen Magnetsensor lassen sich am einfachsten mit Hall IC's realisieren. Neben dem eigentlichen Hall-Sensor, mit einer dem magnetischen Feld senkrecht zur Stromrichtung durch den Sensor proportionalen Ausgangsspannung, ist auf dem Chip ein Spannungsregler, eine Verstärkerelektronik, eine Temperaturkompensation und ein Schmitt-Trigger integriert. Damit stehen am Ausgang bereits rechteckförmige Signale zur Verfügung. Der integrierte Spannungsregler erlaubt einen Betrieb der IC's in einem breiten Spannungsbereich von 3.8 bis 18 Volt, beim für die Anwendung im Encoder gewählten Typ sogar bis 24 Volt. Durch die moderne Fertigung in CMOS-Technologie ist es möglich diese komplexen Schaltungen kostengünstig auf einen Chip zu integrieren und dennoch eine Stromaufnahme von nur ca. 4mA bei 5V Betriebsspannung zu erreichen. Die meisten CMOS Hall-IC's verfügen über eine getaktete Offsetkompensation, die eine hohe Langzeit- und Temperaturstabilität der magnetischen Eigenschaften bewirkt. Der als Open Collector beschaltete Ausgang ist üblicherweise mit bis zu 20mA belastbar.
Die für die Auswahl eines Sonsortyps entscheidenden Merkmale sind:
- Die magnetische Feldstärke, bei der der Ausgang von einem Logikpegel in den anderen schaltet.
- Die Toleranz des Schaltpunktes.
- Die Symmetrie der Schaltpunkte.
- Die Stabilität der Schaltpunkte über der Temperatur.
- Die Hysterese zwischen den Schaltpunkten.

Es können dabei empfindliche Typen, welche bereits bei 4 mT schalten, bis zu IC's verwendet werden, die eine Feldstärke von 45 mT erfordern. Zu entscheiden ist zwischen bipolaren Typen (auch als Hall-Effect Latch bezeichnet), die für ein Schalten des Ausgangs ein entgegengesetztes magnetisches Feld benötigen und zwischen unipolaren Typen, die bei unterschiedlichen Feldstärken der gleichen Richtung schalten. Im vorliegenden Fall werden nur bipolare Hall-Sensoren verwendet, wobei die gleichen Magnetpole an den sich gegenüberliegenden Seiten der Dauermagnete (21, 22) zu liegen kommen.

Der Fahrschalter (18) bildet, wie in Figur 2, 4, 7 und 8 ersichtlich, eine Baueinheit, welche in der unteren oder oberen Aufnahme des Deichselhorngehäuses (3a, 3b) im Bereich des Deichselhorns lagerbar ist. Diese Baueinheit aus gehäuseförmigen Schaltmagnetträger (26'), Leiterplatte (28) und derer äußerer plattenförmige Lagerplatte (29') mit seitlichem Mikroschalter sowie Schalteinsatzgehäuse (47) ist dabei lediglich zwischen der Drehwelle (14) und einem einzigen Anlagepunkt an der Wandung des Deichselhorngehäuses (3a, 3b) gelagert, so dass bis auf die Lagerung bzw. Befestigung dieser Teile an der Drehwelle (14) eine freie Lagerung der Baueinheit des Fahrschalters (18) im Gehäuse gegeben ist. Die Verstell- und Rückstellkräfte der Fahrschaltergriffe (12, 13) wirken somit nicht auf den Fahrschalter (18). Die in Figur 5 dargestellten Fixierrippen (44) des Deichselhorngehäuses (3a, 3b), welche außen am Schalteinsatzgehäuse (47) eingreifen, stellen insofern nur Montagehilfen dar, welche aus ihrem Eingriff gegenüber dem Schalteinsatzgehäuse freigesetzt werden, sobald der Fahrschalter (18) auf der Drehwelle (14) montiert ist.

### Bezugsziffernliste

- Deichselstiel: 1
- Deichselkopf: 2
- Verbindungsstück: 2'
- Deichselhorn: 3
- Gehäuseunterteilabschnitt des Deichselhorns: 3a
- Gehäuseoberteilabschnitt des Deichselhorns: 3b
- Deichselhorngehäuse: 3a, 3b
- Griffstücke des Deichselhorns: 4,5
- Schenkelabschnitte seitlich der Griffstücke (4,5): 6,7
- Trägerabschnitte: 8,9
- Grifföffnungen: 10,11
- Fahrschaltergriff (Flügelrad): 12,13
- Drehwelle der Fahrschaltergriffe (Fahrschalterachse): 14
- Mehrkantstift zur Bildung der Drehwelle (14): 14'
- Endabschnitte der Drehwelle (14): 14a,14b
- Schalttasten: 15,16
- Schrägflächen: 15', 16'
- Fahrtwertgeber: 17
- Fahrschalter des Fahrtwertgebers (mit Hall-Sensor): 18
- Hall-Sensor: 18'
- Rückstellfeder: 19
- Plattenförmiger Schaltmagnetträger: 20
- Dauermagnete des Fahrschalters: 21,22
- Schaltkerbe: 23
- Steuerfläche an der Hall-Sensor Gehäuseaußenseite: 24
- Mikroschalter (Sicherheitsschalter): 25
- kappenartiges Gehäuse,: 26
- Gehäuseförmiger Schaltmagnetträger: 26'
- Schaltnocken: 27
- Leiterplatte (Interface Platine): 28
- Leiterplatte (Gehäusedeckel): 29
- Lagerplatte auf der Rückseite der Leiterplatte (28): 29'
- Durchgangsbohrung: 30
- Lagerbuchse (Innenlager): 31,32
- Buchsenstopfen (Innenlager): 33,34
- Lagerbuchse (Außenlager): 35
- Lagerbuchse (Außenlager): 36
- Buchsenstopfen (Außenlager): 35', 36'
- Anschlagbolzen: 37,38
- Führungsnut: 39,40
- Halterungen: 41
- Seitenwandungen des oberen Hornbereichs: 42,43
- 44, 44': Fixierrippen
- Lagerschalen für Fahrschalterachse am Deichselkopfgehäuse: 45,46
- Schalteinsatzgehäuse: 47
- Körperschutzschalter: 48
- Körperschutzschalter, Schaltnocken: 48'
- Aufnahmen: 49a,49b
- Befestigungshülse: 50
- Schalteinsatz, Schleichgang: 51
- Hupenschalter: 52
- Hupenschalter, Schaltnocken: 52'

## Patentansprüche

1. Deichselkopf (2) mit einem Fahrschalter (18) zur Steuerung des Fahrantriebs eines kraftgetriebenen deichselgelenkten Flurförderzeuges, der an einem freien Ende eines Deichselstiels anzuordnen ist, bestehend aus einem in Verlängerung des Deichselstiels angeordneten Deichselhorn (3) und einem Deichselhorngehäuse (3a,3b), aus beidseits des Deichselhorns sich annähernd quer zu diesem erstreckenden stangenartigen Griffstücken (4,5), die an ihren äußeren Enden in abgewinkelte und sich annähernd parallel zum Deichselhorn erstreckende Schenkelabschnitte (6,7) übergehen und über von diesen Schenkelabschnitten erneut abgewinkelte Trägerabschnitte (8,9) mit dem Deichselhorn bzw. einem Verbindungsstück (2') des Deichselstiels verbunden sind, wobei die Schenkel- und Trägerabschnitte einen Schutzbügel mit Grifföffnungen (10,11) bilden,
und jeweils mit einem Fahrschaltergriff (12,13) zwischen dem jeweiligen Griffstück (4,5) und Deichselhorn (3), wobei die Fahrschaltergriffe mit einer Drehwelle (14) schwenkbar am Deichselhorn gelagert sind, welche annähernd entsprechend der Verbindungsachse zwischen den Griffstücken (4,5) verläuft und eine durch das Deichselkopfgehäuse geführte Fahrschalterachse bildet,
ferner mit mindestens zwei Schalttasten (15,16) auf jeder Seite des Deichselhorns, die in Mulden- oder Schrägflächen der Trägerabschnitte (8,9) angeordnet sind,
und mit einem Fahrtwertgeber (17), der durch eine Drehung in einem Winkel von einer Ausgangsdrehstellung nach rechts oder links der schwenkbar am Deichselhorn gelagerten Fahrschaltergriffe (12,13) im Vorlauf und Rücklauf und der Größe der Geschwindigkeit des Flurförderzeuges einstellbar ist,
wobei durch die Fahrschaltergriffe (12,13) als Fahrschalter (18) für den Fahrtwertgeber (17) ein elektrischer Proportionalschalter betätigbar ist, der auf einer Drehwelle gelagert ist, welche der Drehwelle (14) entspricht oder unter Bildung einer Übersetzung parallel zu der die Fahrschalterachse bildenden Drehwelle (14) der Fahrschaltergriffe (12,13) verläuft und gegen diese kraftmäßig beaufschlagbar ist
und in unterschiedliche Winkelstellungen entsprechend der Gegenkraft einer auf die Drehwelle der Fahrschaltergriffe (12,13) wirkenden Rückstellfeder (19) unter ein Rückstellmoment in eine Ausgangsdrehstellung entsprechend der Fahrgeschwindigkeit 0 km/Std. bringbar ist, wobei der Fahrtwertgeber (17) mit seiner elektrischen und/oder elektronischen Baugruppe innerhalb des Deichselhorngehäuses (3a,3b) gelagert ist,
**dadurch gekennzeichnet, dass**
ein als induktiver Annäherungsschalter (18', 21, 22) ausgebildeter Fahrschalter (18) des Fahrtwertgebers (17) zur Steuerung des Fahrsignals als Proportionalschalter vorgesehen ist, welcher auf einer Leiterplatte (28) und in einem sich seitlich dazu erstreckenden Magnetträger (20, 26') angelegt ist, wobei diese Teile im Deichselhorngehäuse (3a, b) lösbar festlegbar sind,
und wobei der Annäherungsschalter einen von der Leiterplatte (28) ausgehenden, bis zur Innenseite eines gehäuseförmigen drehbaren Schaltmagnetträgers (26') oder bis zur Außenseite eines plattenförmigen drehbaren Schaltmagnetträgers (20) vorstehenden ortsfesten Hall-Sensor (18') aufweist, wobei diese Schaltmagnetträger Schaltmagnete tragen und unmittelbar auf der Drehwelle (14) der Fahrschaltergriffe (12, 13) mit dieser drehfest um einen begrenzten maximalen Winkelbereich verschwenkbar gelagert sind,
und wobei auf dem plattenförmigen drehbaren Schaltmagnetträger (20) oder in dem gehäuseförmigen Schaltmagnetträger (26') als Schaltmagnete zwei beabstandete Dauermagnete (20,21) fest angeordnet sind, gegen welche der Hall-Sensor (18') derart ragt, dass bei einer Drehung des Schaltmagnetträgers (20;26') einer der Schaltmagnete relativ zu diesem Hall-Sensor (18'), der dort frei vorsteht, verstellbar ist,
dass ferner ein bogenförmiges Gehäuseteil vorgesehen ist, welches entweder seitlich außen auf dem Schaltmagnetträger (20) als kappenartiges Gehäuse (26) fest gelagert oder vom gehäuseförmigen Schaltmagnetträger (26') gebildet ist und auf seiner als Steuerfläche (24) ausgebildeten äußeren Stirnwand eine Schaltkerbe (23) aufweist und somit ebenfalls in unterschiedliche Winkelstellungen um begrenzte positive und negative Drehwinkel zur Ausgangsstellung der Drehwelle (14) bei einer Drehung der Fahrschaltergriffe (12, 13) verstellbar ist,
und wobei gegen die Schaltkerbe (23) und die Steuerfläche (24) ein verschwenkbarer Steuernocken (27) eines als Sicherheitsschalter dienenden benachbarten Mikroschalters (25) verstellbar ist, welcher nur bei ausgelenktem Steuernocken (27) das Fahrsignal des Annäherungsschalters zur Ansteuerung der Fahrgeschwindigkeit des Elektroflurförderzeuges freigibt,
und dass eine drehbare Lagerung des verschwenkbaren Schaltmagnetträgers (20;26') gegenüber der zu dieser seitlich beabstandeten, drehfest zwischen Deichselhorngehäuseunter- (3a) und - oberteilabschnitt (3b) gelagerten Leiterplatte (28) und gegenüber den Seitenwandungen (42, 43) dieses Gehäuseabschnittes zusammen mit der diesen Schaltmagnetträger führenden Drehwelle (14) der Fahrschaltergriffe (12, 13) gegeben ist, sowie zusätzlich eine Lagerung der Drehwelle (14) selbst in Innenlager bildenden Lagerbuchsen (31, 32) erfolgt, die in der Leiterplatte (28) und einem den Schalteinsatzträger (20, 26) umgebenden Schalteinsatzgehäuse (47) angelegt sind, sowie in Außenlagern (35, 36; 35', 36') des Deichselhorngehäuses (3a, 3b).

2. Deichselkopf für kraftgetriebene Flurförderzeuge nach Anspruch 1,
**dadurch gekennzeichnet, dass**
der Hall-Sensor (18') in Richtung auf einen äußeren Umfangsrand des plattenförmigen Schaltmagnetträgers (20), der unmittelbar auf der Drehwelle (14) der Fahrschaltergriffe (12, 13) mit dieser drehfest bis um einen begrenzten maximalen Winkelbereich (+/-30°) verschwenkbar gelagert ist,
in einer ausgelassenen Führungsnut frei bei einer Verschwenkung vorsteht und wobei auf dem plattenförmigen drehbaren Schaltmagnetträger (20) an dessen bogenabschnittförmig ausgebildeten Umfangsrand die zwei Dauermagnete (21,22) als zwei zueinander beabstandete Stäbmagnete fest angeordnet sind,
zwischen welchen der Hall-Sensor (18') derart ragt, dass bei einer Drehung des Schaltmagnetträgers (20) die Magnete (21, 22) relativ zu diesem verstellt werden,
dass zumindest das in den Bereich zwischen die Dauermagnete (21, 22) ragende Teil des Hall-Sensors (18') von dem bogenförmigen kappenartigen Gehäuseteil (26) abgedeckt ist, welches zusammen mit den Dauermagneten (21,22) auf dem Schaltmagnetträger (20) fest gelagert verschwenkbar ist und auf seiner als Steuerfläche (24) ausgebildeten äußeren Stirnwand eine Schaltkerbe (23) aufweist und zusammen mit dem plattenförmigen Schaltmagnetträger (20) und den dortigen Dauermagneten (21, 22) in unterschiedliche Winkelstellungen um begrenzte positive und negative Drehwinkel zur Ausgangsstellung der Drehwelle (14) verstellbar ist,
und wobei gegen die Schaltkerbe (23) und die Steuerfläche (24) des kappenartigen Gehäuseteils der verschwenkbare Steuernocken (27) des als Sicherheitsschalter dienenden benachbarten Mikroschalters (25) verstellbar ist, welcher nur bei ausgelenktem Steuernocken (27) das Fahrsignal des Hall-Sensors (18') zur Ansteuerung der Fahrtgeschwindigkeit des Elektroflurförderzeuges freigibt.

3. Deichselkopf für kraftgetriebene Fluförderzeuge nach Anspruch1 oder 2,
**dadurch gekennzeichnet, dass**
die Drehwelle (14) des Fahrschaltergriffes (12,13) aus einem drehbar gelagerten Mehrkantstift (14') gebildet ist, welcher senkrecht zur Außenwandung des Deichselhorngehäuses (3a,3b), zu der zur Lagerung der vorgesehenen elektromagnetischen und elektronischen Baugruppe des Fahrtwertgebers (17) verwendeten Leiterplatte (28), zu dem Schaltmagnetträger (20; 26') und ferner zu einer Lagerplatte (29) des Schalteinsatzgehäuses (47) sich erstreckt und dort in den Lagerbuchsen (31,32) angeordnet ist,
und dass dieser Mehrkantstift der Drehwelle (14) innerhalb einer Durchgangsbohrung (30) in der Außenwandung des Deichselhorngehäuses gelagert ist,
wobei die Führung der Drehwelle (14) bzw. des Mehrkantstiftes (14') außer in der Lagerbuchse (31,32) jeweils über einen zusätzlichen hohlen Buchsenstopfen (33,34) erfolgt, welcher auf die Endabschnitte (14a,b) der Drehwelle (14) außen aufgesteckt ist,
und dass ein Auslenken der Fahrschaltergriffe (12,13) nur bis um einen maximalen Drehwinkel nach rechts und links entsprechend der maximalen Laufgeschwindigkeit des Flurförderzeuges möglich ist, wobei jeweils vom Fahrschaltergriff (12,13) seitlich in axialer Richtung parallel zur Drehwelle (14) der Fahrschaltergriffe ein Anschlagbolzen (37,38) verläuft, welcher in eine im radialen Abstand von der Drehwelle (14) des Fahrschaltergriffes koaxial kreissektorförmig in Umfangsrichtung an der Außenwandung des Deichselhorngehäuses verlaufende Führungsnut (39,40) eingreift.

4. Deichselkopf für kraftgetriebene Flurförderzeuge nach Anspruch 1, 2 oder 3
**dadurch gekennzeichnet, dass**
das Deichselhorngehäuse aus einem Gehäuseunterteil- (3a) und einem Gehäuseoberteilabschnitt (3b) besteht, wobei in einer Aufnahme dieser miteinander verbindbaren Gehäuseteile zumindest die elektronische und/oder elektromagnetische Baugruppe des Fahrtwertgebers (17) anlegbar und dort durch Halterungen (41) die Leiterplatte (28) und das Schalteinsatzgehäuse (47) festlegbar sind,
und wobei innerhalb des das Deichselhorn (3) bildenden Gehäuseoberteilabschnittes (3b) die Anordnung der Drehwelle (14) des Fahrschaltergriffes (12,13) erfolgt, welche zwischen zwei zueinander beabstandete Lagerschalen für diese Drehwelle bildenden Seitenwandungen (42,43) des oberen Hornbereiches des Deichselkopfgehäuses geführt ist,
und wobei an den Außenseiten dieser Seitenwandungen die Führung der Fahrschaltergriffe (12,13) erfolgt, welche mit einem axial nach innen vorspringenden, gleichzeitig die Buchsenstopfen (35',36') bildenden Lagerzapfen die Wellenenden (14a,14b) jeweils drehfest aufnehmen und ferner jeweils mindestens einen radial dazu nach außen beabstandeten, sich nach innen parallel zur Drehwelle (14) erstreckenden Anschlagbolzen (37,38) aufweisen, welcher in eine der kreissektorförmig an der Außenseite der Seitenwandung (42,43) des oberen Hornbereichs verlaufenden und dort eingelassenen Führungsnuten (39,40) eingreift.

5. Deichselkopf für kraftgetriebene Flurförderzeuge nach Anspruch 4,
**dadurch gekennzeichnet, dass**
zur Lagerung der Drehwelle (14) der Fahrschaltergriffe (12,13) zwischen den gegenüberliegenden Seitenwandungen (42,43) des Gehäuseoberteilabschnittes (3b) des Deichselhorns in dort in Umfangsrichtung geschlossen umlaufenden Lagerbereichen zwei zueinander fluchtende Aufnahmeöffnungen als Durchgangsbohrung (30) angelegt sind, in welche Lagerbuchsen (35,36) als Außenlager eingepresst sind, in welchen die Wellenenden (14a,b) aufnehmende Buchsenstopfen (35',36') gelagert sind.

6. Deichselkopf für kraftgetriebene Flurförderzeuge nach Anspruch 3, 4 oder 5,
**dadurch gekennzeichnet, dass**
die Drehwelle (14) der Fahrschaltergriffe (12,13) in einem Bereich der Leiterplatte (28), des Schalteinsatzgehäuses (47) bzw. der Lagerplatte (29) und der Seitenwandungen (42, 43) jeweils über Innen- und Außenlager (31, 32, 33, 34; 35, 36; 35', 36') radial und axial gelagert ist.

7. Deichselkopf für kraftbetriebene Flurförderzeuge nach Anspruch 1-6,
**dadurch gekennzeichnet, dass**
eine Verschwenkung der Fahrschaltergriffe und des Schaltmagnetträgers (20, 26) um +/-30° vorgegeben ist.

## Claims

1. Drawbar head (2) with a controller (18) for controlling the travel drive of a power-driven drawbar-steered industrial truck to be arranged at a free end of a drawbar pole, comprising a drawbar horn (3) arranged in extension of the drawbar pole and a drawbar horn housing (3a, 3b), rod-type grip sections (4, 5), which extend on both sides of the drawbar horn approximately transversely to this, merge at their outer ends into angled leg sections (6, 7) extending approximately parallel to the drawbar horn and which are connected via support sections (8, 9) angled again from these leg sections to the drawbar horn or a connection piece (2') of the drawbar pole, wherein the leg and support sections form a protective bow with grip openings (10, 11), and respectively with a controller handle (12, 13) between the respective grip section (4, 5) and drawbar horn (3), wherein the controller handles are disposed to swivel on the drawbar horn with a rotary shaft (14), which runs approximately in keeping with the connection axis between the grip sections (4, 5) and forms a controller axis directed through the drawbar head housing, additionally with at least two switch keys (15, 16) on each side of the drawbar horn, which are arranged in trough or inclined surfaces of the support sections (8, 9),
and with a drive evaluator (17), which is adjustable in forward or rearward travel and in the magnitude of the speed of the industrial truck through a rotation at an angle from a starting position of rotation to the right or left of the controller handles (12, 13) disposed to swivel on the drawbar horn,
wherein an electric proportional switch disposed on a rotary shaft, which corresponds to the rotary shaft (14) or to form a gear ratio runs parallel to the rotary shaft (14) of the controller handles (12, 13) forming the controller axis and can be applied against these with respect to power, can be operated through the controller handles (12, 13) as controller (18) for the drive evaluator (17),
and can be moved into different angle positions in keeping with the counterforce of a restoring spring (19) acting on the rotary shaft of the controller handles (12, 13) via a restoring moment into a starting position of rotation in keeping with the driving speed 0 km/hr., wherein the drive evaluator (17) is disposed with its electric and/or electronic assembly inside the drawbar horn housing (3a, 3b),
**characterised in that**
a controller (18) of the drive evaluator (17) configured as inductive proximity switch (18', 21, 22) for control of the drive signal is provided as a proportional switch, which is positioned on a circuit board (28) and in a magnetic support (20, 26') extending laterally thereto, wherein these parts can be detachably fixed in the drawbar horn housing (3a, b),
and wherein the proximity switch has a fixed Hall sensor (18'), which extends from the circuit board (28) and projects as far as the inside of a housing-shaped rotatable switching magnet support (26') or as far as the outside of a plate-shaped rotatable switching magnet support (20), wherein these switching magnet supports carry switching magnets and are disposed directly on the rotary shaft (14) of the controller handles (12, 13) to be fixed against rotation with this and to swivel around a limited maximum angular range,
and wherein two spaced permanent magnets (20, 21) are fixedly arranged on the plate-shaped rotatable switching magnet support (20) or in the housing-shaped switching magnet support (26') as switching magnets, and the Hall sensor (18') projects towards said permanent magnets in such a manner that in the case of a rotation of the switching magnet support (20; 26') one of the switching magnets is adjustable relative to this Hall sensor (18'), which freely projects there,
that additionally an arc-shaped housing part is provided, which is either fixedly disposed laterally outside on the switching magnet support (20) as a cap-like housing (26) or is formed by the housing-shaped switching magnet support (26'), and has a switching notch (23) on its outer face wall configured as a control surface (24), and thus is likewise adjustable in different angle positions by limited positive and negative rotation angles to the starting position of the rotary shaft (14) in the case of a rotation of the controller handles (12, 13),
and wherein a rotatable control cam (27) of an adjacent microswitch (25) serving as safety switch is adjustable towards the switching notch (23) and the control surface (24), said microswitch releasing the drive signal of the proximity switch to control the drive speed of the electric industrial truck only when the control cam (27) is deflected,
and that there is a rotatable mounting of the swivelling switching magnet support (20; 26') relative to the circuit board (28) spaced laterally from this and disposed to be fixed against rotation between the lower (3a) and upper part section (3b) of the drawbar horn housing and relative to the side walls (42, 43) of this housing section together with the rotary shaft (14) of the controller handles (12, 13) guiding this switching magnet support, and in addition a mounting of the rotary shaft (14) itself is provided in bearing bushes (31, 32) forming internal bearings, which are positioned in the circuit board (28) and a switch insert housing (47) surrounding the switching insert support (20, 26), as well as in the external bearings (35, 36; 35, 36;) of the drawbar horn housing (3a, 3b).

2. Drawbar head for power-driven industrial trucks according to Claim 1, **characterised in that** during a swivelling movement the Hall sensor (18') projects freely in an expanded guide groove towards an outer peripheral edge of the plate-shaped switching magnet support (20), which is disposed directly on the rotary shaft (14) of the controller handles (12, 13) to swivel with this and to be fixed against rotation to a limited maximum angular range (+/- 30°), and wherein the two permanent magnets (21, 22) are fixedly arranged on the plate-shaped rotatable switching magnet support (20) on its peripheral edge configured in the shape of an arc section as two spaced bar magnets, between which the Hall sensor (18') projects in such a manner that upon a rotation of the switching magnet support (20) the magnets (21, 22) are adjusted relative to this,
that at least the part of the Hall sensor (18') projecting into the region between the permanent magnets (21, 22) is covered by the arc-shaped cap-like housing part (26), which together with the permanent magnets (21, 22) is fixedly disposed to swivel on the switching magnet support (20) and has a switching notch (23) on its outer face wall configured as a contact surface (24),
and, together with the plate-shaped switching magnet support (20) and the permanent magnets (21, 22) there, is adjustable into different angular positions by limited positive and negative angles of rotation to the starting position of the rotary shaft (14),
and wherein the swivelling control cam (27) of the adjacent microswitch (25) serving as a safety switch is adjustable towards the switching notch (23) and the control surface (24) of the cap-like housing part, said microswitch releasing the drive signal of the Hall sensor (18') to control the drive speed of the electric industrial truck only when the control cam (27) is deflectecd.

3. Drawbar head for power-driven industrial trucks according to Claim 1 or 2,
**characterised in that**
the rotary shaft (14) of the controller handle (12, 13) is formed from a rotatably disposed polygonal pin (14'), which extends perpendicular to the outer wall of the drawbar horn housing (3a, 3b), to the circuit board (28) used to mount the provided electromagnetic and electronic assembly of the drive evaluator (17), to the switching magnet support (20; 26') and additionally to a bearing plate (29) of the switching insert housing (47) and is arranged there in bearing bushes (31, 32),
and that this polygonal pin of the rotary shaft (14) is disposed inside a through hole (30) in the outer wall of the drawbar horn housing,
wherein the guidance of the rotary shaft (14) or the polygonal pin (14'), except in the bearing bush (31, 32), is respectively achieved via an additional hollow stuffing box (33, 34), which is attached to the end sections (14a, b) of the rotary shaft (14) on the outside,
and that a deflection of the controller handles (12, 13) is only possible to a maximum angle of rotation to the right and left in keeping with the maximum running speed of the industrial truck, wherein a stop bolt (37, 38) respectively runs from the controller handle (12, 13) laterally in axial direction parallel to the rotary shaft (14) of the controller handles, said stop bolt engaging into a guide groove (39, 40), which extends coaxially in a sector shape in peripheral direction on the outer wall of the drawbar horn housing at a radial distance from the rotary shaft (14) of the controller handle.

4. Drawbar head for power-driven industrial trucks according to Claim 1, 2 or 3,
**characterised in that**
the drawbar horn housing comprises a housing lower part section (3a) and a housing upper part section (3b), wherein in a seating of these interconnectable housing parts at least the electronic and/or electromagnetic assembly of the drive evaluator (17) can be positioned and the circuit board (28) and the switching insert housing (47) can be fixed there by mountings (41),
and wherein the arrangement of the rotary shaft (14) of the controller handle (12, 13) occurs inside the housing upper part section (3b) forming the drawbar horn (3), which is guided between two side walls (42, 43) of the upper horn region of the drawbar head housing forming mutually spaced bearing shells for this rotary shaft,
and wherein the guidance of the controller handles (12, 13) occurs on the outsides of these side walls, which with an axially inwardly projecting bearing journal, which at the same time forms the stuffing boxes (35', 36'), receive the shaft ends (14a, 14b) to respectively be fixed against rotation, and additionally respectively have at least one stop bolt (37, 38), which is spaced outwards radially thereto, extends inwards parallel to the rotary shaft (14), and engages into one of the guide grooves (39, 40) extending in a sector shape on the outside of the side wall (42, 43) of the upper horn region and recessed there.

5. Drawbar head for power-driven industrial trucks according to Claim 4,
**characterised in that**
to mount the rotary shaft (14) of the controller handles (12, 13) between the opposing side walls (42, 43) of the housing upper part section (3b) of the drawbar horn in circumferential bearing regions closed there in peripheral direction, two aligned receiving openings are positioned as a through hole (30), into which bearing bushes (35, 36) are pressed as external bearings, in which stuffing boxes (35', 36') receiving the shaft ends (14a, b) are disposed.

6. Drawbar head for power-driven industrial trucks according to Claim 3, 4 or 5,
**characterised in that**
the rotary shaft (14) of the controller handles (12, 13) is radially and axially disposed in a region of the circuit board (28), of the switching insert housing (47) or the bearing plate (29) and the side walls (42, 43) respectively via internal and external bearings (31, 32, 33, 34; 35, 36; 35', 36').

7. Drawbar head for power-driven industrial trucks according to Claim 1 - 6,
**characterised in that**
a swivel movement of the controller handles and the switching magnet support (20, 26) to +/- 30° is predetermined.

## Revendications

1. Tête de timon (2) comprenant un combinateur de puissance (18) pour la commande du système d'entraînement d'un chariot industriel automoteur guidé, qui doit venir se disposer à une extrémité libre d'une tige de timon, constituée par une oreille de timon (3) qui vient se disposer dans le prolongement de la tige de timon et par un logement d'oreille de timon (3a, 3b), par des éléments de préhension (4, 5) en forme de barres, de part et d'autre de l'oreille de timon, s'étendant approximativement perpendiculairement à ladite oreille, lesdits éléments se transformant, à leurs extrémités externes, en tronçons (6, 7) en forme de branches, formant un angle droit et s'étendant approximativement parallèlement à l'oreille de timon et étant reliés, via des tronçons (8, 9) faisant office de support formant à nouveau un angle droit par rapport à ces tronçons en forme de branches, à l'oreille de timon respectivement à un élément de liaison (2') de la tige de timon, les tronçons en forme de branches et les tronçons faisant office de support formant un étrier de protection comportant des ouvertures de préhension (10, 11) ;
et comprenant respectivement une poignée de combinateur de puissance (12, 13) entre l'élément de préhension respectif (4, 5) et l'oreille de timon (3), les poignées de combinateur de puissance étant montées, à l'aide d'un arbre rotatif (14), en pivotement sur l'oreille de timon qui s'étend, de manière approximativement correspondante à l'axe de liaison, entre les éléments de préhension (4, 5) et qui forme un axe de combinateur de puissance guidé à travers le boîtier de la tête de timon ;
comprenant en outre, au moins deux boutons de commutation (15, 16) de chaque côté de l'oreille de timon, qui sont disposées dans des surfaces renfoncées ou dans des surfaces inclinées des tronçons (8, 9) faisant office de support ;
et comprenant un indicateur de valeur de consigne de marche (17) qui, via une rotation angulaire par rapport à une position de départ en rotation, vers la droite ou vers la gauche des poignées de combinateur de puissance (12, 13) montées en pivotement sur l'oreille de timon, peut être réglé en ce qui concerne la marche avant et la marche arrière et en ce qui concerne la valeur de la vitesse du chariot industriel ;
dans laquelle, via les poignées de combinateur de puissance (12, 13) à titre de combinateur de puissance (18) pour l'indicateur de valeur de consigne de marche (17), un commutateur proportionnel électrique peut être actionné, ledit commutateur étant monté sur un arbre rotatif qui correspond à l'arbre rotatif (14) ou bien qui s'étend, en formant une transmission, parallèlement à l'arbre rotatif (14) des poignées de combinateur de puissance (12, 13), et qui peut être soumis à une sollicitation à force par rapport auxdites poignées
et, dans différentes positions angulaires, en fonction de la force antagoniste d'un ressort de rappel (19) s'exerçant sur l'arbre rotatif des poignées de combinateur de puissance (12, 13), peut être amené en dessous d'un moment de rappel, dans une position de départ en rotation correspondant à la vitesse de marche de 0 km/heure, l'indicateur de valeur de consigne de marche (17) étant monté, avec son assemblage de circuits électriques et/ou électroniques, au sein du boîtier (3a, 3b) de l'oreille de timon,
**caractérisé en ce qu'**on prévoit un combinateur de puissance (18) de l'indicateur de valeur de consigne de marche (17) sous la forme d'un commutateur de proximité inductif (18', 21, 22) pour la commande de propulsion, à titre de commutateur proportionnel, le combinateur de puissance étant disposé sur une plaquette de circuits imprimés (28) et dans un support magnétique (20, 26') s'étendant latéralement par rapport à ladite plaquette, ces éléments étant logés de manière amovible dans le boîtier (3a, b) de l'oreille de timon,
le commutateur de proximité présentant un capteur à effet Hall (18') monté à demeure, faisant saillie jusqu'au côté interne d'un support d'aimant de commutation (26') rotatif en forme de boîtier ou bien jusqu'au côté externe d'un support d'aimant de commutation (20) rotatif en forme de plaquette, ces supports magnétiques de commutation portant des aimants de commutation et étant montés directement sur l'arbre rotatif (14) des poignées de combinateur de puissance (12, 13), à demeure avec ledit arbre, de façon à pouvoir pivoter dans une plage angulaire maximale limitée ;
et deux aimants permanents (20, 21), faisant office d'aimants de commutation, disposés à l'écart l'un de l'autre étant montés à demeure sur le support d'aimant de commutation (20) rotatif en forme de plaquette ou dans le support d'aimant de commutation (26') en forme de boîtier, aimants permanents par rapport auxquels fait saillie le capteur à effet Hall (18') de telle sorte que, lors d'une rotation du support d'aimant de commutation (20 ; 26'), un des éléments de commutation peut être réglé par rapport à ce capteur à effet Hall (18') qui fait librement saillie à cet endroit ;
**en ce qu'**on prévoit en outre un élément de boîtier de forme arquée qui, soit est monté à demeure en position latérale à l'extérieur du support d'aimant de commutation (20), pour faire office de boîtier (26) en forme de chapeau, soit est formé par le support d'aimant de commutation (26') en forme de boîtier, et qui présente, sur sa paroi frontale externe réalisée pour faire office de surface de commande (24), une encoche de commutation (23), pour pouvoir ainsi être réglé, également dans différentes positions angulaires, en formant des angles de rotation positifs et négatifs limités par rapport à la position de départ de l'arbre de rotation (14), lors d'une rotation des poignées de combinateur de puissance (12, 13),
une came de commande (27), apte à pivoter par rapport à l'encoche de commutation (23) et par rapport à la surface de commande (24), d'un microcommutateur voisin (25) faisant office de commutateur de sécurité qui ne libère le signal de propulsion du commutateur de proximité pour le réglage de la vitesse de déplacement du chariot industriel électrique que lorsque la came de commande (27) est sortie ;
et **en ce qu'**on obtient un montage du support d'aimant de commutation (20 ; 26') apte à pivoter, rotatif par rapport à la plaquette de circuits imprimés (28), disposée en position latérale à l'écart dudit support et montée à demeure entre le tronçon de partie inférieure (3a) et le tronçon de partie supérieure (3b) du boîtier d'oreille de timon et par rapport aux parois latérales (42, 43) de cette section de boîtier, de manière conjointe avec l'arbre rotatif (14) des poignées de combinateur de puissance (12, 13) guidant ce support d'aimant de commutation, et on obtient en outre un montage de l'arbre de rotation (14) lui-même dans des douilles de montage (31, 32) formant des paliers internes, les douilles étant disposées dans la plaquette de circuits imprimés (28) et dans un boîtier de bloc de commande (47) entourant le support de bloc de commande (20, 26), ainsi que dans des paliers externes (35, 36 ; 35', 36') du boîtier d'oreille de timon (3a, 3b).

2. Tête de timon pour des chariots industriels automoteurs selon la revendication 1, **caractérisée en ce que** le capteur à effet Hall (18') est monté en pivotement dans une plage angulaire maximale limitée (de ± 30°) dans la direction du bord périphérique externe du support d'aimant de commutation en forme de plaquette (20) qui est monté directement sur l'arbre rotatif (14) des poignées de combinateur de puissance (12, 13), à demeure avec l'arbre en question,
fait librement saillie, lors d'un pivotement, dans une rainure de guidage évidée, et dans laquelle les deux aimants permanents (21, 22) sont disposés à demeure sous la forme de deux aimants en forme de barres, placés à l'écart l'un de l'autre, sur le support d'aimant de commutation (20) rotatif en forme de plaquette, sur le bord périphérique de ce dernier réalisé en forme de tronçon arqué, aimants permanents entre lesquels fait saillie le capteur à effet Hall (18') de telle sorte que, lors d'une rotation du support d'aimant de commutation (20), les aimants (21, 22) se déplacent par rapport audit support ;
**en ce qu'**au moins la partie du capteur à effet Hall (18') faisant saillie dans la zone s'étendant entre les aimants permanents (21, 22) est recouverte par la partie de boîtier (26) de forme arquée faisant office de chapeau, ladite partie étant à même de pivoter avec les aimants permanents (21, 22) montés à demeure sur le support d'aimant de commutation (20) et présentant une encoche de commutation (23) sur sa paroi frontale externe réalisée pour faire office de surface de commande (24), tout en étant réglable, de manière conjointe avec le support d'aimant de commutation (20) en forme de plaquette et avec les aimants permanents (21, 22) qui s'y trouvent, dans des positions angulaires différentes, en formant des angles de rotation positifs et négatifs limités par rapport à la position de départ de l'arbre rotatif (14),
la came de commande pivotante (27) du microcommutateur voisin (25) faisant office de commutateur de sécurité étant réglable par rapport à l'encoche de commutation (23) et par rapport à la surface de commande (24) de la partie de boîtier en forme de chapeau, le microcommutateur ne libérant le signal de propulsion du capteur à effet Hall (18') pour le réglage de la vitesse de déplacement du chariot industriel électrique que lorsque la came de commande (27) est sortie.

3. Tête de timon pour des chariots industriels automoteurs selon la revendication 1 ou 2, **caractérisée en ce que** l'arbre rotatif (14) de la poignée de combinateur de puissance (12, 13) est formé par une tige polygonale (14') montée en rotation qui s'étend perpendiculairement par rapport à la paroi externe du boîtier d'oreille de timon (3a, 3b), par rapport à la plaquette de circuits imprimés (28) utilisée pour le montage de l'assemblage prévu de circuits électromagnétiques et électroniques de l'indicateur de valeur de consigne de marche (17), par rapport au support d'aimant de commutation (20 ; 26') et également par rapport à une plaque d'appui (29) du boîtier de bloc de commande (47), et est monté à cet endroit dans les douilles de paliers (31, 32) ;
et **en ce que** cette tige polygonale de l'arbre rotatif (14) est montée au sein d'un alésage de passage (30) dans la paroi externe du boîtier d'oreille de timon,
le guidage de l'arbre rotatif (14), respectivement de la tige polygonale (14') ayant lieu, à l'exception de l'intérieur de la douille de palier (31, 32) respectivement via un bouchon de douille supplémentaire creux (33, 34) qui vient s'enficher depuis l'extérieur sur les tronçons terminaux (14a, b) de l'arbre rotatif (14),
et **en ce qu'**une déviation des poignées de combinateur de puissance (12, 13) n'est possible que jusqu'en fonction d'un angle de rotation maximale, vers la droite et vers la gauche, de manière correspondante à la vitesse de marche du chariot industriel, un boulon de butée (37, 38) s'étendant respectivement à partir de chaque poignée de combinateur de puissance (12, 13) latéralement en direction axiale parallèlement à l'arbre rotatif (14) des poignées de combinateur de puissance, le boulon en question venant s'insérer dans une rainure de guidage (39, 40) s'étendant dans la direction périphérique, contre la paroi externe du boîtier d'oreille de timon, en formant un secteur de cercle en position coaxiale, à une certaine distance radiale de l'arbre rotatif (14) de la poignée de combinateur de puissance.

4. Tête de timon pour des chariots industriels automoteurs selon la revendication 1, 2 ou 3,
**caractérisée en ce que** le boîtier d'oreille de timon est constitué par un tronçon de partie inférieure de boîtier (3a) et par un tronçon de partie supérieure de boîtier (3b), au moins l'assemblage de circuits électroniques et/ou électromagnétiques de l'indicateur de valeur de consigne de marche (17) étant à même de venir s'insérer dans un logement de ces parties de boîtier aptes à se relier l'une à l'autre, la plaquette de circuits imprimés (28) et le boîtier de bloc de commande (47) étant à même de s'y fixer via des fixations (41),
et dans laquelle l'agencement de l'arbre rotatif (14) de la poignée de combinateur de puissance (12, 13) ayant lieu au sein du tronçon de la partie supérieure de boîtier (3b) formant l'oreille de timon (3), l'arbre en question étant guidé entre deux coquilles de palier disposées à l'écart l'une de l'autre pour des parois latérales (42, 43) de la zone supérieure de l'oreille du boîtier de la tête du timon, les parois en question formant cet arbre rotatif, le guidage des poignées de combinateur de puissance (12, 13) ayant lieu contre le côté externe de sa paroi latérale, poignées dans lesquelles viennent se loger respectivement en antirotation les extrémités d'arbre (14a, 14b) avec un tourillon de palier faisant saillie vers l'intérieur en direction axiale et formant simultanément les bouchons de douille (35', 36'), et qui présentent en outre respectivement au moins un boulon de butée (37, 38) disposé à l'écart vers l'extérieur en direction radiale et s'étendant vers l'intérieur parallèlement à l'arbre rotatif (14), qui vient s'insérer dans une rainure de guidage (39, 40) qui s'étend en formant un secteur de cercle sur le côté externe de la paroi latérale (42, 43) de la zone supérieure de l'oreille et que l'on obtient par évidement à cet endroit.

5. Tête de timon pour des chariots industriels automoteurs selon la revendication 4, **caractérisée en ce que**, pour le montage de l'arbre rotatif (14) des poignées de combinateur de puissance (12, 13) entre les parois latérales opposées (42, 43) du tronçon de la partie supérieure de boîtier (3b), dans des zones de paliers périphériques fermées à cet endroit en direction périphérique, on pratique deux ouvertures de réception disposées à fleur l'une par rapport à l'autre pour faire office d'alésage de passage (30), ouvertures dans lesquelles on introduit par pression des douilles de paliers (35, 36) pour faire office de palier externe, dans lesquelles sont montés les bouchons de douilles (35', 36') dans lesquels viennent se disposer les extrémités d'arbre (14a, b).

6. Tête de timon pour des chariots industriels automoteurs selon la revendication 3, 4 ou 5, **caractérisée en ce que** l'arbre rotatif (14) des poignées de combinateur de puissance (12, 13) est monté en direction radiale et en direction axiale dans une zone de la plaquette de circuits imprimés (28), du boîtier de bloc de commande (47), respectivement de la plaque d'appui (29) et des parois latérales (42, 43), respectivement via des paliers internes et externes (31, 32, 33, 34 ; 35, 36 ; 35', 36').

7. Tête de timon pour des chariots industriels automoteurs, selon l'une quelconque des revendications 1 à 6, **caractérisée en ce qu'**on prédéfinit un pivotement des poignées de combinateur de puissance et du support d'aimant de commutation (20, 26) de ± 30°.
